# EUROPÄISCHE PATENTSCHRIFT

(11) **EP 4 166 225 B1**
(45) Veröffentlichungstag und Bekanntmachung des Hinweises auf die Patenterteilung: **18.02.2026**
(21) Anmeldenummer: 22195754.1
(22) Anmeldetag: 15.09.2022
(51) Int. Cl.: B01F 23/213, B01F 25/314, B01F 25/421

(54) **MISCHER**
MIXER
MÉLANGEUR

(30) Priorität: 12.10.2021 DE 102021126364
(43) Veröffentlichungstag der Anmeldung: 19.04.2023
(73) Patentinhaber: Purem GmbH, 66539 Neunkirchen (DE)
(72) Erfinder: Weinmann, Philipp, Esslingen (DE); Többen, Heike, Uhingen (DE); Velyaev, Oleksandr, Stuttgart (DE); Paule, Alex, Plochingen (DE)
(74) Vertreter: Ruttensperger Lachnit Trossin Gomoll

(56) Entgegenhaltungen:
- EP-A1- 3 757 364
- DE-A1- 102016 108 113

## Beschreibung

Die vorliegende Erfindung betrifft einen Mischer, welcher in einer Abgasanlage einer Brennkraftmaschine dazu eingesetzt wird, von einer Brennkraftmaschine ausgestoßenes Abgas und in das Abgas eingespritztes Reaktionsmittel zu durchmischen.

Zur Verringerung des Schadstoffausstoßes insbesondere bei DieselBrennkraftmaschinen ist es bekannt, stromaufwärts einer SCR-Katalysatoranordnung in einer Abgasanlage ein Reaktionsmittel, beispielsweise eine Harnstoff/WasserLösung, in das von der Brennkraftmaschine ausgestoßene Abgas einzuspritzen. Dieses Reaktionsmittel unterstützt bzw. ermöglicht die in der SCR-Katalysatoranordnung durchzuführende selektive katalytische Reduktion zur Verringerung des Stickoxidanteils in dem Abgas.

Ein Mischer gemäß dem Oberbegriff des Anspruchs 1 ist aus der EP 3 757 364 A1 bekannt. Bei diesem bekannten Mischer tritt das von einer Brennkraftmaschine ausgestoßene Abgas durch eine Eintrittsöffnung einer Eintrittsöffnungsanordnung in einer eine Mischkammer begrenzenden stromaufwärtigen Mischerwand in die Mischkammer ein, wird in der Mischkammer mit in die Mischkammer eingespritztem Reaktionsmittel vermischt und verlässt die Mischkammer durch eine Mehrzahl von in einer stromabwärtigen Mischerwand ausgebildeten Austrittsöffnungen einer Austrittsöffnungsanordnung.

Aus der DE 10 2016 108 113 A1 ist eine Vorrichtung zum Einbringen eines Reaktionsmittels in einen Abgasstrom bekannt, welche eine Mehrzahl von von Abgas umströmbaren Verdampferplatten umfasst. Das Reaktionsmittel wird im Wesentlichen quer zu einer Abgasströmungsrichtung auf die Oberflächen der Verdampferplatten aufgebracht.

Es ist die Aufgabe der vorliegenden Erfindung, einen Mischer für eine Abgasanlage einer Brennkraftmaschine zum Durchmischen von Abgas und Reaktionsmittel bereitzustellen, mit welchem eine effiziente, gleichmäßige Durchmischung von Abgas und in dieses eingespritztem Reaktionsmittel erreicht wird.

Erfindungsgemäß wird diese Aufgabe gelöst durch einen Mischer für eine Abgasanlage einer Brennkraftmaschine zum Durchmischen von Abgas und Reaktionsmittel gemäß Anspruch 1. Dieser Mischer umfasst:
- eine Mischkammer, wobei die Mischkammer durch eine stromaufwärtige Mischerwand, eine in Richtung einer Mischerlängsachse auf die stromaufwärtige Mischerwand folgende und in axialem Abstand dazu angeordnete stromabwärtige Mischerwand und eine zwischen der stromaufwärtigen Mischerwand und der stromabwärtigen Mischerwand sich erstreckende Umfangswand begrenzt ist,
- eine Reaktionsmittelabgabeanordnung zur Abgabe von Reaktionsmittel in die Mischkammer axial zwischen der stromaufwärtigen Mischerwand und der stromabwärtigen Mischerwand, vorzugsweise in einer bezüglich der Mischerlängsachse im Wesentlichen radial orientierten Reaktionsmittel-Hauptabgaberichtung,
- eine Eintrittsöffnungsanordnung in der stromaufwärtigen Mischerwand,
- eine Austrittsöffnungsanordnung in der stromabwärtigen Mischerwand oder der Umfangswand,
- eine zwischen der stromaufwärtigen Mischerwand und der stromabwärtigen Mischerwand angeordnete Strömungsleitanordnung zum Leiten von Abgas oder/und Reaktionsmittel von der Eintrittsöffnungsanordnung zur Austrittsöffnungsanordnung, wobei die Strömungsleitanordnung einen von der Eintrittsöffnungsanordnung zur Austrittsöffnungsanordnung führenden ersten Strömungspfad und einen von der Eintrittsöffnungsanordnung zur Austrittsöffnungsanordnung führenden zweiten Strömungspfad bereitstellt, wobei jeder Strömungspfad wenigstens zwei von der Eintrittsöffnungsanordnung zur Austrittsöffnungsanordnung führende Strömungskanäle aufweist.

Durch die Aufteilung des Abgasstroms in der Mischkammer auf mehrere jeweils einen Teil des gesamten Abgasstroms führende Strömungspfade und das Leiten jedes in einem Strömungspfad geführten Teils des Abgasstroms durch mehrere Strömungskanäle hindurch ist einerseits durch die bei dieser Strömungsführung bzw. Strömungsaufteilung unvermeidbar entstehenden Verwirbelungen dafür gesorgt, dass Abgas und Reaktionsmittel sich beim Strömen in Richtung zur Austrittsöffnungsanordnung gut durchmischen. Andererseits ist durch das Leiten des Abgases und des Reaktionsmittels durch eine Vielzahl von jeweils durch Oberflächen von Bauteilen des Mischers begrenzten Strömungskanälen hindurch gewährleistet, dass eine große Gesamtoberfläche vorhanden ist, mit welcher insbesondere das Reaktionsmittel in Kontakt treten kann. Im Arbeitsbetrieb einer Brennkraftmaschine sind diese Oberflächen durch den entlang diesen geführten Abgasstrom auf eine vergleichsweise hohe Temperatur gebracht, wodurch das Verdampfen des im Allgemeinen in Form eines Sprühnebels eingebrachten Reaktionsmittels unterstützt wird.

Bei dem erfindungsgemäßen Mischer werden die in den beiden Strömungspfaden geführten Anteile des gesamten Abgasstroms zueinander strömungstechnisch parallel, räumlich jedoch grundsätzlich voneinander getrennt zwischen der Eintrittsöffnungsanordnung und der Austrittsöffnungsanordnung geführt. Gleichermaßen werden in jedem der Strömungspfade in dessen Strömungskanälen die darin strömenden Anteile des gesamten Abgasstroms zueinander strömungstechnisch parallel, räumlich jedoch grundsätzlich voneinander getrennt zwischen der Eintrittsöffnungsanordnung und der Austrittsöffnungsanordnung geführt. Dies schließt nicht aus, dass in einer oder mehreren derartige Strömungskanäle trennenden Wänden Öffnungen vorhanden sind, beispielsweise um zwischen den einzelnen Strömungskanälen einen Druckausgleich realisieren zu können. Auch bei derartiger Ausgestaltung strömen die in den einzelnen Strömungskanälen geführten Anteile des gesamten Abgasstroms in räumlich voneinander getrennten Volumenbereichen und bilden nicht Teile eines in einem einheitlichen Volumen geführten Gesamtstroms.

Um Ungleichförmigkeiten in der Durchmischung von Abgas und Reaktionsmittel in den beiden Strömungspfaden zu vermeiden, wird vorgeschlagen, dass der erste Strömungspfad mit seinen Strömungskanälen und der zweite Strömungspfad mit seinen Strömungskanälen bezüglich einer vorzugsweise die Mischerlängsachse enthaltenden Mischer-Mittenebene im Wesentlichen spiegelsymmetrisch zueinander ausgebildet sind. Dabei kann beispielsweise das durch die Reaktionsmittelabgabeanordnung in die Mischkammer abgegebene Reaktionsmittel mit einer im Wesentlichen in der Mischer-Mittenebene liegenden Reaktionsmittel-Hauptabgaberichtung in die Mischkammer eingeleitet werden.

Eine gleichförmige Durchströmung der Mischkammer kann weiter dadurch unterstützt werden, dass die Eintrittsöffnungsanordnung beidseits einer vorzugsweise die Mischerlängsachse enthaltenden Mischer-Mittenebene jeweils wenigstens eine Eintrittsöffnung umfasst, oder/und dass die Eintrittsöffnungsanordnung bezüglich der Mischer-Mittenebene im Wesentlichen spiegelsymmetrisch ausgebildet ist.

Ferner kann hierzu vorgesehen sein, dass die Austrittsöffnungsanordnung wenigstens eine bezüglich einer vorzugsweise die Mischerlängsachse enthaltenden Mischer-Mittenebene zentriert angeordnete Austrittsöffnung umfasst, oder/und dass die Austrittsöffnungsanordnung bezüglich der Mischer-Mittenebene im Wesentlichen spiegelsymmetrisch ausgebildet ist, oder/und dass die Austrittsöffnungsanordnung wenigstens zwei bezüglich der Mischerlängsachse radial gestaffelte Austrittsöffnungen in der stromabwärtigen Mischerwand umfasst.

Zum Bereitstellen der in Zuordnung zu den beiden Strömungspfaden vorgesehenen Strömungskanäle umfasst die Strömungsleitanordnung in Zuordnung zu wenigstens einem, vorzugsweise jedem Strömungspfad wenigstens zwei zwischen der stromaufwärtigen Mischerwand und der stromabwärtigen Mischerwand sich erstreckende Strömungsleitwände, wobei wenigstens eine Strömungsleitwand zusammen mit der Umfangswand einen Strömungskanal begrenzt oder/und wenigstens eine Strömungsleitwand zusammen mit einer weiteren Strömungsleitwand einen Strömungskanal begrenzt.

Für einen einfach zu realisierenden, gleichwohl stabilen Aufbau wird vorgeschlagen, dass die Strömungsleitwände sich zwischen der stromaufwärtigen Mischerwand und der stromabwärtigen Mischerwand im Wesentlichen parallel zur Mischerlängsachse erstrecken.

Für einen einfach zu realisierenden, gleichwohl stabilen Aufbau sind die Strömungsleitwände mit der stromaufwärtigen Mischerwand und der stromabwärtigen Mischerwand durch Materialschluss, vorzugsweise Verschweißen oder Verlöten, oder/und Formschluss verbunden.

Ein einfacher, eine definierte Strömungsführung unterstützender Aufbau kann weiter dadurch erreicht werden, dass die Strömungsleitanordnung wenigstens ein für jeden der Strömungspfade jeweils eine Strömungsleitwand bereitstellendes Strömungsleitelement umfasst. Ein derartiges Strömungsleitelement kann beispielsweise einstückig, also aus einem einzigen Teil bzw. monolithisch, ausgebildet sein.

Die Strömungsleitanordnung kann ein äußeres Strömungsleitelement umfassen, wobei das äußere Strömungsleitelement z.B. zusammen mit der Umfangswand einen äußeren Strömungskanal des ersten Strömungspfads begrenzt und einen äußeren Strömungskanal des zweiten Strömungspfads begrenzt, wobei das äußere Strömungsleitelement einen äußeren Übergangsbereich bereitstellt, wobei in dem äußeren Übergangsbereich eine durch das äußere Strömungsleitelement bereitgestellte äußere Strömungsleitwand des ersten Strömungspfads in eine durch das äußere Strömungsleitelement bereitgestellte äußere Strömungsleitwand des zweiten Strömungspfads übergeht, oder/und wobei das äußere Strömungsleitelement einen äußeren Öffnungsbereich zum Eintritt von Abgas oder/und Reaktionsmittel in einen von dem äußeren Strömungsleitelement umgebenen Bereich der Mischkammer bereitstellt.

Um dabei einen größtmöglichen Strömungsweg entlang des äußeren Strömungsleitelements erzeugen zu können, kann der durch das äußere Strömungsleitelement bereitgestellte äußere Öffnungsbereich dem durch das äußere Strömungsleitelement bereitgestellten äußeren Übergangsbereich bezüglich der Mischerlängsachse im Wesentlichen gegenüberliegend positioniert sein.

Die Strömungsleitanordnung kann ein inneres Strömungsleitelement umfassen, wobei das innere Strömungsleitelement z.B. zusammen mit einem weiteren Strömungsleitelement einen inneren Strömungskanal des ersten Strömungspfads und einen inneren Strömungskanal des zweiten Strömungspfads begrenzt, wobei das innere Strömungsleitelement einen inneren Übergangsbereich bereitstellt, wobei in dem inneren Übergangsbereich eine durch das innere Strömungsleitelement bereitgestellte innere Strömungsleitwand des ersten Strömungspfads in eine durch das innere Strömungsleitelement bereitgestellte innere Strömungsleitwand des zweiten Strömungspfads übergeht, oder/und wobei das innere Strömungsleitelement einen inneren Öffnungsbereich zum Eintritt von Abgas oder/und Reaktionsmittel in einen von dem inneren Strömungsleitelement umgebenen Bereich der Mischkammer bereitstellt.

Um auch entlang des inneren Strömungsleitelements einen möglichst langen und in beiden Strömungspfaden im wesentlichen gleichlangen Strömungsweg erzeugen zu können, wird vorgeschlagen, dass der durch das innere Strömungsleitelement bereitgestellte innere Öffnungsbereich dem durch das innere Strömungsleitelement bereitgestellten inneren Übergangsbereich bezüglich der Mischerlängsachse im Wesentlichen gegenüberliegend positioniert ist.

Dabei kann der innere Übergangsbereich in Umfangsrichtung um die Mischerlängsachse im Bereich des äußeren Öffnungsbereichs angeordnet sein oder/und das innere Strömungsleitelement kann den äußeren Öffnungsbereich in Umfangsrichtung überdecken. Ferner kann der äußere Übergangsbereich in Umfangsrichtung um die Mischerlängsachse im Bereich des inneren Öffnungsbereichs angeordnet sein oder/und kann das äußere Strömungsleitelement den inneren Öffnungsbereich in Umfangsrichtung überdecken.

Um durch die Formgebung der Strömungsleitelemente die gleichmäßige Durchströmung der Mischkammer und somit eine gleichmäßige Vermischung von Abgas und Reaktionsmittel zu unterstützen, wird vorgeschlagen, dass das äußere Strömungsleitelement bezüglich einer vorzugsweise die Mischerlängsachse enthaltenden Mischer-Mittenebene im Wesentlichen spiegelsymmetrisch ausgebildet ist, oder/und dass das innere Strömungsleitelement bezüglich einer vorzugsweise die Mischerlängsachse enthaltenden Mischer-Mittenebene im Wesentlichen spiegelsymmetrisch ausgebildet ist oder bezüglich einer vorzugsweise zur Mittenlängsachse orthogonalen Symmetrieachse im Wesentlichen punktsymmetrisch ausgebildet ist.

Zur Bereitstellung einer großen Anzahl an Strömungskanälen kann die Strömungsleitanordnung in Zuordnung zu dem ersten Strömungspfad wenigstens eine zwischen der äußeren Strömungsleitwand des ersten Strömungspfads und der inneren Strömungsleitwand des ersten Strömungspfads angeordnete mittlere Strömungsleitwand des ersten Strömungspfads umfassen, wobei die wenigstens eine mittlere Strömungsleitwand des ersten Strömungspfads mit der äußeren Strömungsleitwand des ersten Strömungspfads einen mittleren Strömungskanal des ersten Strömungspfads begrenzt und mit der inneren Strömungsleitwand des ersten Strömungspfads den inneren Strömungskanal des ersten Strömungspfads begrenzt, oder/und kann die Strömungsleitanordnung in Zuordnung zu dem zweiten Strömungspfad wenigstens eine zwischen der äußeren Strömungsleitwand des zweiten Strömungspfads und der inneren Strömungsleitwand des zweiten Strömungspfads angeordnete mittlere Strömungsleitwand des zweiten Strömungspfads umfassen, wobei die wenigstens eine mittlere Strömungsleitwand des zweiten Strömungspfads mit der äußeren Strömungsleitwand des zweiten Strömungspfads einen mittleren Strömungskanal des zweiten Strömungspfads begrenzt und mit der inneren Strömungsleitwand des zweiten Strömungspfads den inneren Strömungskanal des zweiten Strömungspfads begrenzt.

Für den Eintritt von Abgas in die verschiedenen Strömungskanäle der beiden Strömungspfade können die wenigstens eine mittlere Strömungsleitwand des ersten Strömungspfads und die wenigstens eine mittlere Strömungsleitwand des zweiten Strömungspfads einen ersten mittleren Öffnungsbereich bereitstellen. Dabei kann der erste mittlere Öffnungsbereich in Umfangsrichtung bezüglich der Mischerlängsachse im Bereich des äußeren Öffnungsbereichs angeordnet sein oder/und eine geringere Umfangserstreckungslänge als der äußere Öffnungsbereich aufweisen, oder/und kann die wenigstens eine mittlere Strömungsleitwand des ersten Strömungspfads und die wenigstens eine mittlere Strömungsleitwand des zweiten Strömungspfads einen zweiten mittleren Öffnungsbereich bereitstellen, wobei der zweite mittlere Öffnungsbereich in Umfangsrichtung bezüglich der Mischerlängsachse im Bereich des inneren Öffnungsbereichs angeordnet ist oder/und eine geringere Umfangserstreckungslänge als der innere Öffnungsbereich aufweist.

Für eine symmetrische Ausgestaltung des Mischers können die wenigstens eine mittlere Strömungsleitwand des ersten Strömungspfads und die wenigstens eine mittlere Strömungsleitwand des zweiten Strömungspfads bezüglich einer vorzugsweise die Mischerlängsachse enthaltenden Mischer-Mittenebene im Wesentlichen spiegelsymmetrisch angeordnet sein.

Bei einer alternativen Ausgestaltungsart, bei welcher beispielsweise nur zum gemeinsamen Bereitstellen der inneren Strömungsleitwände der beiden Strömungspfade ein inneres Strömungsleitelement vorgesehen ist, kann die Strömungsleitanordnung in Zuordnung zu dem ersten Strömungspfad wenigstens eine zwischen der Umfangswand und der inneren Strömungsleitwand des ersten Strömungspfads angeordnete weitere Strömungsleitwand des ersten Strömungspfads umfassen, wobei die wenigstens eine weitere Strömungsleitwand des ersten Strömungspfads z.B. mit der Umfangswand einen äußeren Strömungskanal des ersten Strömungspfads begrenzt und mit der inneren Strömungsleitwand des ersten Strömungspfads den inneren Strömungskanal des ersten Strömungspfads begrenzt, oder/und kann die Strömungsleitanordnung in Zuordnung zu dem zweiten Strömungspfad wenigstens eine zwischen der Umfangswand und der inneren Strömungsleitwand des zweiten Strömungspfads angeordnete weitere Strömungsleitwand des zweiten Strömungspfads umfassen, wobei die wenigstens eine weitere Strömungsleitwand des zweiten Strömungspfads z.B. mit der Umfangswand einen äußeren Strömungskanal des zweiten Strömungspfads begrenzt und mit der inneren Strömungsleitwand des zweiten Strömungspfads den inneren Strömungskanal des zweiten Strömungspfads begrenzt.

Um auch bei einem derartigen Aufbau eine möglichst große Anzahl an Strömungskanälen bereitzustellen, kann die Strömungsleitanordnung in Zuordnung zu dem ersten Strömungspfad zwei weitere Strömungsleitwände umfassen, wobei die weiteren Strömungsleitwände des ersten Strömungspfads einen äußeren Strömungskanal des ersten Strömungspfads begrenzen, oder/und kann die Strömungsleitanordnung in Zuordnung zu dem zweiten Strömungspfad zwei weitere Strömungsleitwände umfassen, wobei die weiteren Strömungsleitwände des zweiten Strömungspfads einen äußeren Strömungskanal des zweiten Strömungspfads begrenzen.

Dabei kann eine gleichmäßige Durchmischung dadurch unterstützt werden, dass die wenigstens eine weitere Strömungsleitwand des ersten Strömungspfads und die wenigstens eine weitere Strömungsleitwand des zweiten Strömungspfads bezüglich einer vorzugsweise die Mischerlängsachse enthaltenden Mischer-Mittenebene im Wesentlichen spiegelsymmetrisch angeordnet sind.

Zum weiteren Unterstützen der Durchmischung von Abgas und Reaktionsmittel auch stromabwärts der Mischkammer kann stromabwärts der Austrittsöffnungsanordnung ein Mischelement mit einer Mehrzahl von Abgasdurchtrittsöffnungen vorgesehen sein.

Zum Aufbau einer langgestreckten Abgasanlage kann die Umfangswand durch ein in Richtung der Mischerlängsachse langgestrecktes rohrartiges Mischergehäuse bereitgestellt sein, wobei das Mischergehäuse in einem Bereich stromaufwärts der stromaufwärtigen Mischerwand und stromabwärts der stromabwärtigen Mischerwand jeweils einen in Richtung der Mischerlängsachse an die Mischkammer anschließenden Abgasströmungskanal bereitstellt, wobei der stromaufwärts der stromaufwärtigen Mischerwand angeordnete Abgasströmungskanal über die in der stromaufwärtigen Mischerwand ausgebildete Eintrittsöffnungsanordnung zur Mischkammer offen ist und die Mischkammer zu dem stromabwärts der stromabwärtigen Mischerwand angeordneten Abgasströmungskanal über die in der stromabwärtigen Mischerwand ausgebildete Austrittsöffnungsanordnung offen ist, und wobei eine Abgas-Hauptströmungsrichtung im stromaufwärts der stromaufwärtigen Mischerwand angeordneten Abgasströmungskanal im Wesentlichen einer Abgas-Hauptströmungsrichtung im stromabwärts der stromabwärtigen Mischerwand Abgeordneten Abgasströmungskanal entspricht.

Bei einer Abgasanlage mit einem gewundenen Abgasströmungsweg können die stromaufwärtige Mischerwand und die stromabwärtige Mischerwand durch ein kastenartiges Mischergehäuse bereitgestellt sein, wobei das kastenartige Mischergehäuse einen zu der stromaufwärtigen Mischerwand führenden Einströmöffnungsbereich und einen Ausströmöffnungsbereich aufweist, wobei eine Abgas-Hauptströmungsrichtung im Ausströmöffnungsbereich einer Abgas-Hauptströmungsrichtung im Einströmöffnungsbereich im Wesentlichen entgegengesetzt ist.

Die Erfindung betrifft ferner eine Abgasanlage für eine Brennkraftmaschine, umfassend einen erfindungsgemäßen Mischer.

Die vorliegende Erfindung wird nachfolgend mit Bezug auf die beiliegenden Figuren detailliert beschrieben. Es zeigt:
- Fig. 1: eine perspektivische Ansicht einer ersten Ausgestaltungsform eines Mischers für eine Abgasanlage;
- Fig. 2: eine Ansicht des Mischers der Fig. 1 bei Blickrichtung stromabwärts;
- Fig. 3: eine Querschnittansicht des Mischers der Fig. 1, geschnitten zwischen einer stromaufwärtigen Mischerwand und einer stromabwärtigen Mischerwand mit Blickrichtung stromabwärts;
- Fig. 4: eine Ansicht des Mischers der Fig. 1 mit Blickrichtung stromaufwärts;
- Fig. 5: eine weitere Ansicht des Mischers der Fig. 1 mit Blickrichtung stromaufwärts;
- Fig. 6: eine perspektivische Ansicht einer alternativen Ausgestaltungsart eines Mischers für eine Abgasanlage;
- Fig. 7: eine Querschnittansicht des Mischers der Fig. 6 mit Blickrichtung stromaufwärts;
- Fig. 8: eine Querschnittansicht des Mischers der Fig. 6 mit Blickrichtung stromabwärts.

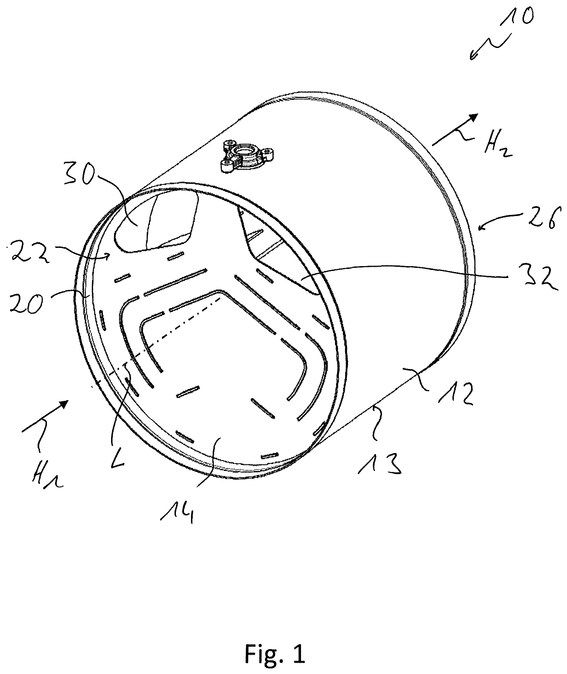

Eine erste Ausgestaltungsform eines Mischers 10 für eine Abgasanlage einer Brennkraftmaschine ist in den Fig. 1 bis 5 dargestellt.

Der im Wesentlichen in Richtung einer Mischerlängsachse L langgestreckte Mischer 10 umfasst eine in Richtung der Mischerlängsachse L langgestreckte bzw. diese umgebende Umfangswand 12, eine stromaufwärtige Mischerwand 14 und eine in Richtung der Mischerlängsachse in axialem Abstand zur stromaufwärtigen Mischerwand 14 angeordnete stromabwärtige Mischerwand 16. Die vorzugsweise aus Blechmaterial aufgebauten Mischerwände 14, 16 können mit der vorzugsweise ebenfalls aus Blechmaterial aufgebauten und im Wesentlichen ein rohrartiges Mischergehäuse 13 bereitstellenden Umfangswand 12 beispielsweise durch Verschweißen, Verlöten oder dergleichen fest verbunden sein.
Axial zwischen der stromaufwärtigen Mischerwand 14 und der stromabwärtigen Mischerwand 16 ist eine Mischkammer 18 gebildet. Abgas, das in Richtung einer Abgashauptströmungsrichtung H₁ stromaufwärts der stromaufwärtigen Mischerwand 14 durch einen stromaufwärts der stromaufwärtigen Mischerwand 14 verlaufenden Abgasströmungskanal 20 auf die stromaufwärtige Mischerwand 14 zu strömt, kann durch eine in der stromaufwärtigen Mischerwand 14 gebildete Eintrittsöffnungsanordnung 22 in die Mischkammer 18 eintreten. In der stromabwärtigen Stirnwand 16 ist eine Austrittsöffnungsanordnung 24 gebildet, durch welche hindurch Abgas bzw. ein Gemisch aus Abgas und Reaktionsmittel aus der Mischkammer 18 austritt und in einen stromabwärts der stromabwärtigen Mischerwand 16 verlaufenden Abgaskanal 26 eintritt, in welchem das Abgas bzw. das Gemisch aus Abgas und Reaktionsmittel in einer im Wesentlichen der Abgashauptströmungsrichtung H₁ im Bereich des Abgasströmungskanals 20 entsprechenden Abgasströmungsrichtung H₂ strömt.

Durch eine allgemein als Injektor bezeichnete Reaktionsmittelabgabeanordnung 28, welche an der Umfangswand 12 getragen ist, wird ein Reaktionsmittel beispielsweise in Form eines Sprühkegels im Wesentlichen senkrecht zur Mischerlängsachse eingespritzt. Dabei kann die Reaktionsmittelabgabeanordnung so angeordnet sein, dass das Reaktionsmittel mit einer beispielsweise einer Mittenachse des Sprühkegels entsprechenden Reaktionsmittel-Hauptabgaberichtung R in die Mischkammer 18 eingespritzt werden, welche in einer auch die Mischerlängsachse L enthaltenden Mischer-Mittenebene E liegt.

Die Eintrittsöffnungsanordnung 22 umfasst im dargestellten Ausgestaltungsbeispiel zwei beidseits bezüglich der Mischer-Mittenebene E angeordnete und bezüglich dieser im Wesentlichen spiegelsymmetrisch ausgebildete Eintrittsöffnungen 30, 32. Diese sind bezüglich der Mischerlängsachse L nach radial außen versetzt und liegen insbesondere näher an der Umfangswand 12 als an der Mischerlängsachse L. Die Mischerlängsachse L kann beispielsweise eine Längsmittenachse des Mischergehäuses 13 sein.

In der stromabwärtigen Mischerwand 16 ist eine Austrittsöffnungsanordnung 34 vorgesehen. Diese umfasst im dargestellten Ausgestaltungsbeispiel zwei radial gestaffelt angeordnete Austrittsöffnungen 36, 38, welche zur Mischer-Mittenebene E im Wesentlichen spiegelsymmetrisch ausgebildet sind. Die beiden radial gestaffelt liegenden Austrittsöffnungen 36, 38 liegen radial zwischen der Mischerlängsachse L, also dem radialen Zentrum des Mischers 10, und der Umfangswand 12 und sind insbesondere so angeordnet, dass bei Betrachtung in Richtung der Mischerlängsachse L kein Überlapp zwischen der Eintrittsöffnungsanordnung 22 und der Austrittsöffnungsanordnung 34 besteht. Abgas, das durch die Eintrittsöffnungsanordnung 22 in die Mischkammer 18 eintritt, kann somit nicht, ohne in der Mischkammer 18 umgelenkt zu werden, axial durch die Mischkammer 18 hindurch und über die Austrittöffnungsanordnung 34 aus dieser ausströmen.

Zwischen der stromaufwärtigen Mischerwand 14 und der stromabwärtigen Mischerwand 16 ist eine allgemein mit 40 bezeichnete Strömungsleitanordnung vorgesehen. Die Strömungsleitanordnung 40 umfasst eine Mehrzahl von nachfolgend detaillierter erläuterten Strömungsleitwänden bzw. diese bereitstellenden Strömungsleitelementen und stellt zwei Strömungspfade 42, 42' bereit. Die Strömungspfade 42, 42' führen das über die Eintrittsöffnungsanordnung 22 in die Mischkammer 18 eintretende Abgas durch die Mischkammer 18 hindurch zur Austrittsöffnungsanordnung 34. Die strömungstechnisch parallel zur Austrittsöffnungsanordnung 34 führenden Strömungspfade 42, 42' sind zur Mischer-Mittenebene E im Wesentlichen spiegelsymmetrisch ausgebildet.

Jeder der beiden Strömungspfade 42, 42' weist im dargestellten Ausgestaltungsbeispiel drei Strömungskanäle auf. Ein jeweiliger äußerer Strömungskanal 44, 44' ist zwischen der Umfangswand 12 und einer jeweiligen äußeren Strömungsleitwand 46, 46' gebildet. Ein jeweiliger mittlerer Strömungskanal 48, 48' ist zwischen der jeweiligen äußeren Strömungsleitwand 46, 46' und einer jeweiligen mittleren Strömungsleitwand 50, 50' gebildet. Schließlich ist ein jeweiliger innerer Strömungskanal 52, 52' bei jedem der Strömungspfade 42, 42' zwischen der jeweiligen mittleren Strömungsleitwand 50, 50' und einer jeweiligen inneren Strömungsleitwand 54, 54' gebildet bzw. begrenzt.

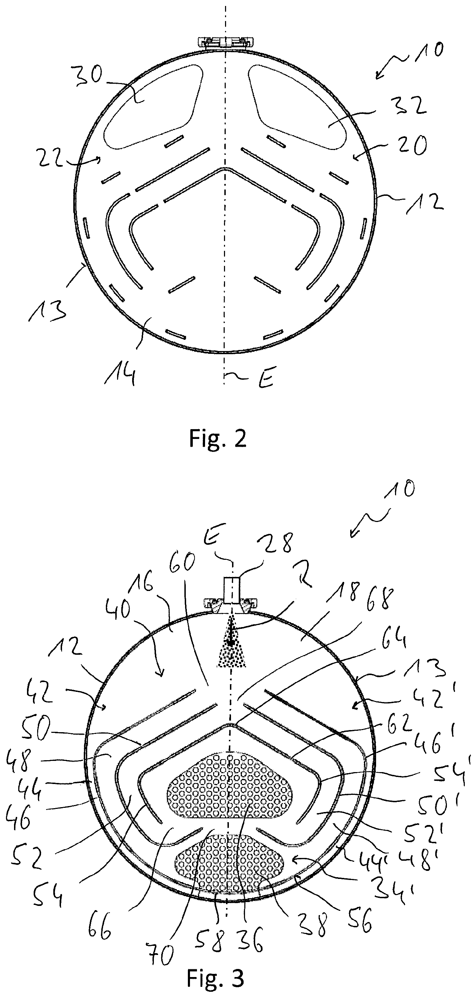

Man erkennt in der Darstellung der Fig. 3, dass die beiden äußeren Strömungsleitwände 46, 46' gemeinsam durch ein äußeres Strömungsleitelement 56 bereitgestellt sind. Das beispielsweise als Blechumformteil bereitgestellte äußere Strömungsleitelement 56 stellt in einem Umfangsbereich, welcher im Wesentlichen der Positionierung der Austrittsöffnungsanordnung 34 entspricht, einen äußeren Übergangsbereich 58 bereit, in welchem die beiden äußeren Strömungsleitwände 46, 46' aneinander anschließen bzw. übergehen. In einem dem äußeren Übergangsbereich 58 bezüglich der Mischerlängsachse L gegenüberliegenden Umfangsbereich bildet das äußere Strömungsleitelement 56 einen äußeren Öffnungsbereich 60, über welchen Abgas bzw. Reaktionsmittel in den vom äußeren Strömungsleitelement 56 umgebenen Bereich der Mischkammer 18 eintreten kann.

Die beiden inneren Strömungsleitwände 54, 54' sind gemeinsam durch ein inneres Strömungsleitelement 62 bereitgestellt. Auch dieses kann als Blechumformteil ausgebildet sein und stellt näherungsweise im Bereich der Mischerlängsachse L einen inneren Übergangsbereich 64 bereit, in welchem die inneren Strömungsleitwände 54, 54' aneinander anschließen bzw. ineinander übergehen. Der innere Übergangsbereich 64 des inneren Strömungsleitelements 62 ist so positioniert, dass er im Bereich des äußeren Öffnungsbereichs 60 des äußeren Strömungsleitelements 56 liegt bzw. diesen überdeckt. In dem dem äußeren Übergangsbereich 58 des äußeren Strömungsleitelements 56 gegenüberliegenden Umfangsbereich weist das innere Strömungsleitelement 62 einen inneren Öffnungsbereich 66 auf, über welchen Abgas bzw. Reaktionsmittel in den vom inneren Strömungsleitelement 62 umgebenen Bereich der Mischkammer 18 eintreten kann.

Die beiden als separate Bauteile bereitgestellten mittleren Strömungsleitwände 50, 50' stellen in dem Umfangsbereich, in welchem der äußere Öffnungsbereich 60 des äußeren Strömungsleitelements 56 und der innere Übergangsbereich 64 des inneren Strömungsleitelements 62 positioniert sind, einen ersten mittleren Öffnungsbereich 68 bereit, und stellen in dem Umfangsbereich, in welchem der äußere Übergangsbereich 58 des äußeren Strömungsleitelements 56 und der innere Öffnungsbereich 66 des inneren Strömungsleitelements 62 positioniert sind, einen zweiten mittleren Öffnungsbereich 70 bereit. Der erste mittlere Öffnungsbereich 68 weist eine geringere Umfangserstreckung auf, als der äußere Öffnungsbereich 60, und der zweite mittlere Öffnungsbereich 70 weist eine geringere Umfangserstreckung auf, als der innere Öffnungsbereich 66. Die den zweiten mittleren Öffnungsbereich 70 zwischen sich bildenden Endbereiche der mittleren Strömungsleitwände 50, 50' können so geformt sein, dass sie zwischen die beiden Austrittsöffnungen 36, 38 eingreifen und durch den jeweiligen inneren Strömungskanal 52, 52' strömendes Abgas bzw. Reaktionsmittel in Richtung zu der radial weiter innen liegenden und einen größeren Öffnungsquerschnitt aufweisenden Austrittsöffnung 36 leiten.

Man erkennt in Fig. 3 deutlich, dass insbesondere auch zum Erhalt der spiegelsymmetrischen Ausgestaltung der Strömungspfade 42, 42' die diesen jeweils zugeordneten Strömungsleitwände 46, 50, 54 einerseits und 46', 50', 54' andererseits bezüglich der Mischer-Mittenebene E im Wesentlichen spiegelsymmetrisch angeordnet sind, so dass insbesondere auch die Öffnungsbereiche 60, 66, 68, 70 bezüglich der Mischer-Mittenebene E im Wesentlichen spiegelsymmetrisch bzw. zentriert angeordnet sind.

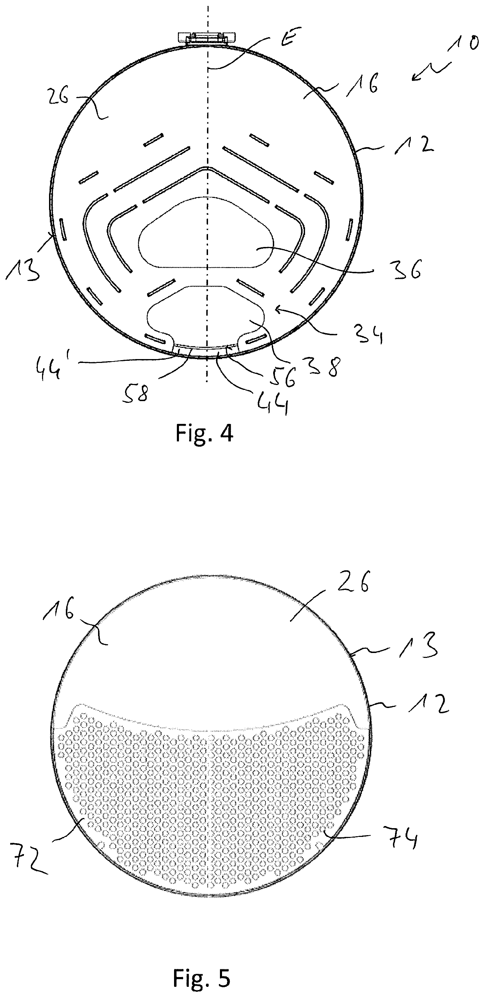

Die zwischen der stromaufwärtigen Mischerwand 14 und der stromabwärtigen Mischerwand 16 angeordneten Strömungsleitwände 46, 46', 50, 50', 54, 54' bzw. die diese bereitstellenden Strömungsleitelemente 56, 62 verlaufen zwischen den Mischerwänden 14, 16 im Wesentlichen in Richtung der Mischerlängsachse L. Zur festen Anbindung an die stromaufwärtige Mischerwand 14 und die stromabwärtige Mischerwand 16 können in diesen schlitzartige Öffnungen vorgesehen sein, in welche Eingriffsvorsprünge an den axialen Endbereichen der Strömungsleitwände bzw. Strömungsleitelemente eingreifend positioniert werden können. Diese Vorsprünge sind in den Axialansichten der Fig. 2 und 4 erkennbar. In diesen Bereichen können die Strömungsleitwände bzw. Strömungsleitelemente mit den Mischerwänden 14, 16 beispielsweise durch Materialschluss, z. B. Verschweißen oder Verlöten, fest verbunden sein. Alternativ oder zusätzlich können in diesen Bereichen die Strömungsleitwände bzw. Strömungsleitelemente durch Formschluss mit den Mischerwänden 14, 16 fest verbunden sein. Ein vollständiger gasdichter Anschluss der Strömungsleitwände bzw. Strömungsleitelemente an die Mischerwände 14, 16 ist zwar vorteilhaft, jedoch nicht zwingend erforderlich, da aufgrund der Dimensionierung der Eintrittsöffnungen 30, 32 bzw. der Austrittsöffnungen 36, 38 im Wesentlichen der gesamte Abgasstrom durch diese hindurchtreten wird.

In dem stromabwärts der stromabwärtigen Mischerwand 16 verlaufenden Abgasströmungskanal 26 ist ein in Fig. 5 erkennbares, beispielsweise halbkreisscheibenartig oder mondartig geformtes Mischelement 72 angeordnet. Dieses weist einen axialen Abstand zur stromabwärtigen Mischerwand 16 auf und ist so angeordnet bzw. dimensioniert, dass es bei Betrachtung in axialer Richtung die Austrittsöffnungsanordnung 34 vollständig überdeckt. In dem Mischelement 72, welches, ebenso wie die stromaufwärtige Mischerwand 14 und die stromabwärtige Mischerwand 16, im Wesentlichen plattenartig ausgebildet ist und zur Mischerlängsachse L im Wesentlichen orthogonal angeordnet ist, ist eine Vielzahl von Abgasdurchtrittsöffnungen 74 vorgesehen. Das aus der Mischkammer 18 über die Austrittsöffnungsanordnung 34 austretende Gemisch aus Abgas und Reaktionsmittel trifft im Abgasströmungskanal 26 zunächst auf das Mischelement 72. Ein Teil des Stroms aus Abgas und Reaktionsmittel wird durch das Mischelement 72 seitlich abgelenkt und gelangt in den Querschnittsbereich des Abgasströmungskanals 26, welcher vom Mischelement 72 nicht überdeckt ist. Der verbleibende Teil des die Mischkammer 18 verlassende Gemisch aus Abgas und Reaktionsmittel strömt durch die Abgasdurchtrittsöffnungen 74 des Mischelements 72 hindurch. Dies unterstützt die Vermischung von Abgas und Reaktionsmittel, so dass nach dem Mischelement 72 im Abgasströmungskanal 26 ein im Wesentlichen homogen mit Reaktionsmittel durchmischter Abgasstrom in der Abgashauptströmungsrichtung H₂ im Wesentlichen in Richtung der Mischerlängsachse L weiter strömt.

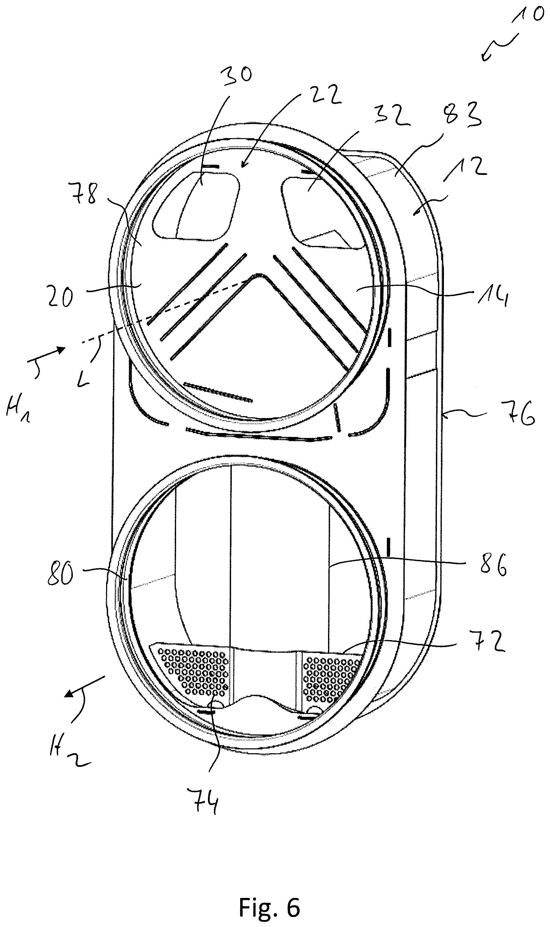

Eine alternative Ausgestaltungsart eines Mischers 10 für eine Abgasanlage einer Brennkraftmaschine ist in den Fig. 6 bis 8 dargestellt. Komponenten, welche vorangehend beschriebenen Komponenten hinsichtlich Aufbau bzw. Funktion entsprechen, sind mit dem gleichen Bezugszeichen bezeichnet.

Bei dem in den Fig. 6 bis 8 dargestellten Ausgestaltungsbeispiel sind die stromaufwärtige Mischerwand 14 und die stromabwärtige Mischerwand 16 ebenso wie auch ein Teil der Umfangswand 12 durch ein kastenartiges Mischergehäuse 76 bereitgestellt. In Zuordnung zur stromaufwärtigen Mischerwand 14 ist an dem kastenartigen Mischergehäuse 76 ein beispielsweise durch einen zylindrischen Ansatz bereitgestellter Einströmöffnungsbereich 78 bereitgestellt. Durch diesen bzw. ein daran anschließendes rohrartiges Abgasführungselement kann Abgas in der Abgashauptströmungsrichtung H₁ in Richtung der Mischerlängsachse L auf die stromaufwärtige Mischerwand 14 bzw. die darin ausgebildete Eintrittsöffnungsanordnung 22 zu strömen. Quer zur Mischerlängsachse L versetzt ist in dem kastenartigen Mischergehäuse 76 ein beispielsweise gleichermaßen durch einen im Wesentlichen zylindrischen Ansatz bereitgestellter Ausströmöffnungsbereich 80 gebildet, aus welchem das Abgas bzw. das Gemisch aus Abgas und Reaktionsmittel nach dem Durchströmen des Mischers 10 beispielsweise in eine im Wesentlichen rohrartige Abgasführungskomponente in Richtung der Abgashauptströmungsrichtung H₂ ausströmt, welche somit der Abgashauptströmungsrichtung H₁ stromaufwärts der stromaufwärtigen Mischerwand 14 im Wesentlichen entgegengesetzt orientiert ist.

Im Inneren des kastenartigen Mischergehäuses 12 ist ein Umfangswandelement 82 angeordnet, welches zusammen mit einem Umfangswandabschnitt 83 des kastenartigen Mischergehäuses 76 die die Mischkammer 18 nach radial außen umgrenzende Umfangswand 12 bereitstellen. In einem zu der Mischer-Mittenebene E des Mischers 10 zentralen Abschnitt des Umfangswandelements 82 ist eine Austrittsöffnung 84 der Austrittsöffnungsanordnung 34 vorgesehen. Im Bereich dieser Austrittsöffnung 84 schließt ein rohrartiges Abgasführungselement 86 an das Umfangswandelement 82 an. Aus der Mischkammer 18 im Bereich der Austrittsöffnung 84 austretendes Abgas bzw. Gemisch aus Abgas und Reaktionsmittel gelangt in das Abgasführungselement 86 und tritt aus diesem im Bereich einer Austrittsöffnung 88 in einer Abgasströmungsrichtung aus, welche zu den Abgashauptströmungsrichtungen H₁, H₂ im Wesentlichen orthogonal ist. Der Austrittsöffnung 88 liegt ein auf diese zu gewölbter Umlenkbereich 90 des Mischergehäuses 76 gegenüber, durch welchen der aus der Austrittsöffnung 88 austretende Strom aus Abgas und Reaktionsmittel seitlich abgelenkt wird. Der Bereich des Ausströmöffnungsbereichs 80, in welchem auch die Austrittsöffnung 88 des Abgasführungselements 86 positioniert ist, ist durch das Mischelement 72 überdeckt. Das aus der Austrittsöffnung 88 austretende Abgas strömt somit nach Umlenkung am Umlenkbereich 90 entweder durch die Abgasdurchtrittsöffnungen 74 des Mischelements 72 hindurch oder am Mischelement 72 vorbei in den Ausströmöffnungsbereich 80 und dann weiter in die dann folgende Abgasführungskomponente.

Auch bei dem in den Fig. 6 bis 8 dargestellten Mischer ist eine Strömungsleitanordnung 40 vorgesehen, welche zwei strömungstechnisch zueinander im Wesentlichen parallel zur Austrittsöffnungsanordnung 34 führende Strömungspfade 42, 42' aufweist. Auch diese Strömungspfade 42, 42' sind zur Mischer-Mittenebene E im Wesentlichen spiegelsymmetrisch ausgestaltet. Die Strömungsleitanordnung 40 umfasst auch bei dieser Ausgestaltungsart das Innere Strömungsleitelement 62 mit seinem in Richtung stromaufwärts orientierten inneren Übergangsbereich 64.

Die Strömungsleitanordnung 40 umfasst ferner die beiden mittleren Strömungsleitwände 50, 50', welche zusammen mit dem inneren Strömungsleitelement 62 bzw. den durch dieses bereitgestellten inneren Strömungsleitwänden 54, 54' die inneren Strömungskanäle 52, 52' begrenzen.

Die Strömungsleitanordnung 40 umfasst ferner die äußeren Strömungsleitwände 46, 46', welche zusammen mit den mittleren Strömungsleitwänden 50, 50' äußere Strömungskanäle 44, 44' begrenzen. Die beiden äußeren Strömungsleitwände 46, 46' sind bei dieser Ausgestaltungsart nicht durch ein gemeinsames Strömungsleitelement bereitgestellt, sondern sind als separate Bauteile ausgebildet und schließen in ihrem stromabwärtigen Endbereichen an die Umfangswand 12 bzw. das Umfangswandelement 82 an. Bei einer alternativen Ausgestaltungsart könnten die beiden äußeren Strömungsleitwände 46, 46' mit dem Umfangswandelement 82 einstückig ausgebildet sein, so dass das Umfangswandelement 82 bei derartiger Ausgestaltung ein zwei Strömungsleitwände bereitstellendes Strömungsleitelement bilden würde.

Bei dem in den Fig. 6 bis 8 dargestellten Aufbau des Mischers 10 strömt das durch die Eintrittsöffnungsanordnung 22 in die Mischkammer 18 gelangende Abgas, ebenso wie das durch die Reaktionsmittelabgabeanordnung 28 abgegebene Reaktionsmittel, in Richtung auf den zwischen den stromaufwärtigen Enden der äußeren Strömungsleitwände 46, 46' gebildeten äußeren Öffnungsbereich 60 bzw. den zwischen den stromaufwärtigen Enden der mittleren Strömungsleitwände 50, 50' gebildeten ersten mittleren Öffnungsbereichs 68 zu. Das Abgas bzw. das Reaktionsmittel wird auf die beiden Strömungspfade 42, 42' bzw. die beiden bei jedem der beiden Strömungspfade 42, 42' vorhandenen Strömungskanäle 44, 52 bzw. 44', 52' aufgeteilt und strömt entlang dieser Strömungskanäle 44, 52 bzw. 44', 52' in Richtung zu der im Umfangswandelement 82 gebildeten Austrittsöffnung 84. Dabei wird an den stromabwärtigen Enden der jeweiligen inneren und äußeren Strömungskanäle 44, 52 bzw. 44', 52' in jedem Strömungspfad 42, 42' der Strom aus Abgas und Reaktionsmittel wieder vereinigt und durch das Umfangswandelement 82 einerseits und die stromabwärtigen Endbereiche der inneren Strömungsleitwände 54, 54' zur Austrittsöffnung 84 geleitet.

Um bei bzw. vor dem Eintritt des Gemisches aus Abgas und Reaktionsmittel in die Austrittsöffnung 84 die Durchmischung von Abgas und Reaktionsmittel weiter zu fördern, sind an den zwischen sich den inneren Öffnungsbereich 66 bildenden Enden der inneren Strömungsleitwände 54, 54' durch Umbiegen bereitgestellte Strömungsablenkelemente 92, 92' vorgesehen. Diese lenken den im jeweiligen Strömungspfad 42, 42' geführten Teil des Stroms aus Abgas und Reaktionsmittel in Richtung der Mischerlängsachse L in zueinander entgegengesetzten Richtungen ab, so dass beim Einströmen in die Austrittsöffnung 84 eine Drallströmung erzeugt wird.

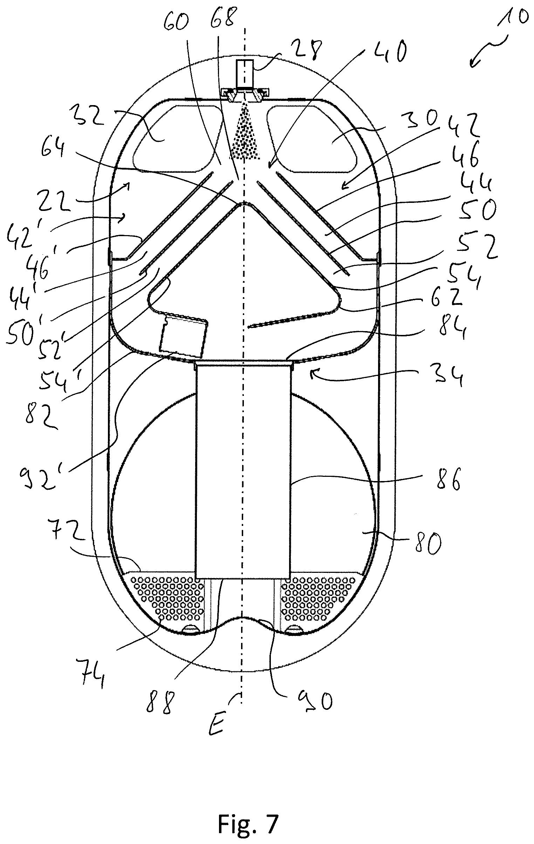

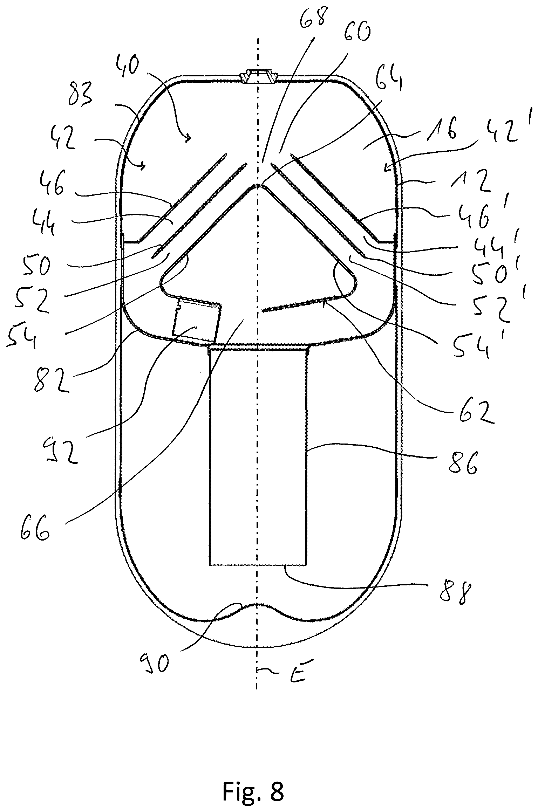

Bei dieser Ausgestaltung ist das die inneren Strömungsleitwände 54, 54' bereitstellende Strömungsleitelement 62 zur Mischer-Mittenebene E nicht exakt spiegelsymmetrisch ausgebildet, da insbesondere in den die Strömungsablenkelemente 92, 92' bereitstellenden Endbereiche die Strömungsleitwände 54, 54' keine spiegelsymmetrische, sondern eine bezüglich einer zur Mischerlängsachse L im Wesentlichen orthogonalen Symmetrieachse punktsymmetrische Ausgestaltung aufweisen. Diese Symmetrieachse ist in den Darstellungen der Fig. 7 und 8 beispielsweise durch die die zur Zeichenebene orthogonale Mischer-Mittenebene bezeichnende Linie E repräsentiert.

Durch die Ausgestaltung eines erfindungsgemäßen Mischers derart, dass der Abgasstrom im Bereich der Mischkammer auf zwei Strömungspfade aufgeteilt wird und in jedem Strömungspfad durch wenigstens zwei Strömungskanäle hindurchströmt, ist dafür gesorgt, dass das Abgas und auch das in dieses eingespritzte Reaktionsmittel an vergleichsweise großen Oberflächen in Kontakt mit dem Mischer bzw. Komponenten desselben treten kann. Dies fördert einerseits die Verwirbelung und andererseits die Erwärmung des Reaktionsmittels, so dass dessen Verdampfung und damit auch Durchmischung mit dem Abgas effizient unterstützt wird.

## Patentansprüche

1. Mischer für eine Abgasanlage einer Brennkraftmaschine zum Durchmischen von Abgas und Reaktionsmittel, umfassend:
- eine Mischkammer (18), wobei die Mischkammer (18) durch eine stromaufwärtige Mischerwand (14), eine in Richtung einer Mischerlängsachse (L) auf die stromaufwärtige Mischerwand (14) folgende und in axialem Abstand dazu angeordnete stromabwärtige Mischerwand (16) und eine zwischen der stromaufwärtigen Mischerwand (14) und der stromabwärtigen Mischerwand (16) sich erstreckende Umfangswand (12) begrenzt ist,
- eine Reaktionsmittelabgabeanordnung (28) zur Abgabe von Reaktionsmittel in die Mischkammer (18) axial zwischen der stromaufwärtigen Mischerwand (14) und der stromabwärtigen Mischerwand (16), vorzugweise in einer bezüglich der Mischerlängsachse (L) im Wesentlichen radial orientierten Reaktionsmittel-Hauptabgaberichtung (R),
- eine Eintrittsöffnungsanordnung (22) in der stromaufwärtigen Mischerwand (14),
- eine Austrittsöffnungsanordnung (34) in der stromabwärtigen Mischerwand (16) oder der Umfangswand (12),
- eine zwischen der stromaufwärtigen Mischerwand (14) und der stromabwärtigen Mischerwand (16) angeordnete Strömungsleitanordnung (40) zum Leiten von Abgas oder/und Reaktionsmittel von der Eintrittsöffnungsanordnung (22) zur Austrittsöffnungsanordnung (34), wobei die Strömungsleitanordnung (40) einen von der Eintrittsöffnungsanordnung (22) zur Austrittsöffnungsanordnung (34) führenden ersten Strömungspfad (42) und einen von der Eintrittsöffnungsanordnung (22) zur Austrittsöffnungsanordnung (34) führenden zweiten Strömungspfad (42') bereitstellt, wobei jeder Strömungspfad (42, 42') wenigstens zwei von der Eintrittsöffnungsanordnung (22) zur Austrittsöffnungsanordnung (34) führende Strömungskanäle (44, 48, 52, 44', 48' 52') aufweist,
**dadurch gekennzeichnet, dass** die Strömungsleitanordnung (40) in Zuordnung zu wenigstens einem Strömungspfad (42, 42') wenigstens zwei zwischen der stromaufwärtigen Mischerwand (14) und der stromabwärtigen Mischerwand (16) sich erstreckende, mit der stromaufwärtigen Mischerwand (14) und der stromabwärtigen Mischerwand (16) durch Materialschluss oder/und Formschluss verbundene Strömungsleitwände (46, 50, 54, 46', 50', 54') umfasst, wobei wenigstens eine Strömungsleitwand (46, 46') zusammen mit der Umfangswand (12) einen Strömungskanal (44, 44') begrenzt oder/und wenigstens eine Strömungsleitwand (46, 50, 46', 50') zusammen mit einer weiteren Strömungsleitwand (50, 54, 50', 54') einen Strömungskanal (44, 48, 52, 44', 48', 52') begrenzt.

2. Mischer nach Anspruch 1, **dadurch gekennzeichnet, dass** der erste Strömungspfad (42) mit seinen Strömungskanälen (44, 48, 52) und der zweite Strömungspfad (42') mit seinen Strömungskanälen (44', 48', 52') bezüglich einer die Mischerlängsachse (L) enthaltenden Mischer-Mittenebene (E) im Wesentlichen spiegelsymmetrisch zueinander ausgebildet sind.

3. Mischer nach Anspruch 1 oder 2, **dadurch gekennzeichnet, dass** die Eintrittsöffnungsanordnung 22) beidseits einer vorzugsweise die Mischerlängsachse (L) enthaltenden Mischer-Mittenebene (E) jeweils wenigstens eine Eintrittsöffnung (30, 32) umfasst, oder/und dass die Eintrittsöffnungsanordnung (22) bezüglich der Mischer-Mittenebene (E) im Wesentlichen spiegelsymmetrisch ausgebildet ist.

4. Mischer nach einem der Ansprüche 1-3, **dadurch gekennzeichnet, dass** die Austrittsöffnungsanordnung (34) wenigstens eine bezüglich einer vorzugsweise die Mischerlängsachse (L) enthaltenden Mischer-Mittenebene (E) zentriert angeordnete Austrittsöffnung (36, 38) umfasst, oder/und dass die Austrittsöffnungsanordnung (34) bezüglich der Mischer-Mittenebene (E) im Wesentlichen spiegelsymmetrisch ausgebildet ist, oder/und dass die Austrittsöffnungsanordnung (34) wenigstens zwei bezüglich der Mischerlängsachse (L) radial gestaffelte Austrittsöffnungen (36, 38) in der stromabwärtigen Mischerwand (16) umfasst.

5. Mischer nach einem der Ansprüche 1-4, **dadurch gekennzeichnet, dass** die Strömungsleitanordnung (40) in Zuordnung zu jedem Strömungspfad (42, 42') wenigstens zwei zwischen der stromaufwärtigen Mischerwand (14) und der stromabwärtigen Mischerwand (16) sich erstreckende Strömungsleitwände (46, 50, 54, 46', 50', 54') umfasst.

6. Mischer nach einem der Ansprüche 1-5, **dadurch gekennzeichnet, dass** die Strömungsleitwände (46, 50, 54, 46', 50', 54') sich zwischen der stromaufwärtigen Mischerwand (14) und der stromabwärtigen Mischerwand (16) (14) im Wesentlichen parallel zur Mischerlängsachse (L) erstrecken, oder/und dass die Strömungsleitwände (46, 50, 54, 46', 50', 54') mit der stromaufwärtigen Mischerwand (14) und der stromabwärtigen Mischerwand (16) durch Verschweißen oder Verlöten verbunden sind.

7. Mischer nach Anspruch 5 oder Anspruch 6, sofern auf Anspruch 5 rückbezogen, **dadurch gekennzeichnet, dass** die Strömungsleitanordnung (40) wenigstens ein für jeden der Strömungspfade (42, 42') jeweils eine Strömungsleitwand (46, 54, 46', 54') bereitstellendes Strömungsleitelement (56, 62) umfasst.

8. Mischer nach Anspruch 7, **dadurch gekennzeichnet, dass** die Strömungsleitanordnung (40) ein äußeres Strömungsleitelement (56) umfasst, wobei das äußere Strömungsleitelement (56) einen äußeren Strömungskanal (44) des ersten Strömungspfads (42) begrenzt und einen äußeren Strömungskanal (44') des zweiten Strömungspfads (42') begrenzt, wobei das äußere Strömungsleitelement (56) einen äußeren Übergangsbereich (58) bereitstellt, wobei in dem äußeren Übergangsbereich (56) eine durch das äußere Strömungsleitelement (56) bereitgestellte äußere Strömungsleitwand (46) des ersten Strömungspfads (42) in eine durch das äußere Strömungsleitelement (56) bereitgestellte äußere Strömungsleitwand (46') des zweiten Strömungspfads (42') übergeht, oder/und wobei das äußere Strömungsleitelement (56) einen äußeren Öffnungsbereich (60) zum Eintritt von Abgas oder/und Reaktionsmittel in einen von dem äußeren Strömungsleitelement (56) umgebenen Bereich der Mischkammer (18) bereitstellt,
vorzugsweise wobei der durch das äußere Strömungsleitelement (56) bereitgestellte äußere Öffnungsbereich (60) dem durch das äußere Strömungsleitelement (56) bereitgestellten äußeren Übergangsbereich (58) bezüglich der Mischerlängsachse (L) im Wesentlichen gegenüberliegend positioniert ist.

9. Mischer nach Anspruch 7 oder 8, **dadurch gekennzeichnet, dass** die Strömungsleitanordnung (40) ein inneres Strömungsleitelement (62) umfasst, wobei das innere Strömungsleitelement (62) einen inneren Strömungskanal (52) des ersten Strömungspfads (42) und einen inneren Strömungskanal (52') des zweiten Strömungspfads (42') begrenzt, wobei das innere Strömungsleitelement (62) einen inneren Übergangsbereich (64) bereitstellt, wobei in dem inneren Übergangsbereich (64) eine durch das innere Strömungsleitelement (62) bereitgestellte innere Strömungsleitwand (54) des ersten Strömungspfads (42) in eine durch das innere Strömungsleitelement (62) bereitgestellte innere Strömungsleitwand (54') des zweiten Strömungspfads (42') übergeht, oder/und wobei das innere Strömungsleitelement (62) einen inneren Öffnungsbereich (66) zum Eintritt von Abgas oder/und Reaktionsmittel in einen von dem inneren Strömungsleitelement (62) umgebenen Bereich der Mischkammer (18) bereitstellt,
vorzugsweise wobei der durch das innere Strömungsleitelement (62) bereitgestellte innere Öffnungsbereich (66) dem durch das innere Strömungsleitelement (62) bereitgestellten inneren Übergangsbereich (64) bezüglich der Mischerlängsachse (L) im Wesentlichen gegenüberliegend positioniert ist.

10. Mischer nach Anspruch 8 und Anspruch 9, **dadurch gekennzeichnet, dass** der innere Übergangsbereich (64) in Umfangsrichtung um die Mischerlängsachse (L) im Bereich des äußeren Öffnungsbereichs (60) angeordnet ist oder/und das innere Strömungsleitelement (62) den äußeren Öffnungsbereich (66) in Umfangsrichtung überdeckt, oder/und dass der äußere Übergangsbereich (58) in Umfangsrichtung um die Mischerlängsachse (L) im Bereich des inneren Öffnungsbereichs (66) angeordnet ist oder/und das äußere Strömungsleitelement (56) den inneren Öffnungsbereich (66) in Umfangsrichtung überdeckt.

11. Mischer nach Anspruch 8 oder Anspruch 9 oder nach Anspruch 10, **dadurch gekennzeichnet, dass** das äußere Strömungsleitelement (56) bezüglich einer vorzugsweise die Mischerlängsachse (L) enthaltenden Mischer-Mittenebene (E) im Wesentlichen spiegelsymmetrisch ausgebildet ist, oder/und dass das innere Strömungsleitelement (62) bezüglich einer vorzugsweise die Mischerlängsachse (L) enthaltenden Mischer-Mittenebene (E) im Wesentlichen spiegelsymmetrisch ausgebildet ist oder bezüglich einer vorzugsweise zur Mittenlängsachse (L) orthogonalen Symmetrieachse im Wesentlichen punktsymmetrisch ausgebildet ist.

12. Mischer nach Anspruch 8 und Anspruch 9 oder nach Anspruch 10 oder 11, **dadurch gekennzeichnet, dass** die Strömungsleitanordnung (40) in Zuordnung zu dem ersten Strömungspfad (42) wenigstens eine zwischen der äußeren Strömungsleitwand (44) des ersten Strömungspfads (42) und der inneren Strömungsleitwand (54) des ersten Strömungspfads (42) angeordnete mittlere Strömungsleitwand (50) des ersten Strömungspfads (42) umfasst, wobei die wenigstens eine mittlere Strömungsleitwand (50) des ersten Strömungspfads (42) mit der äußeren Strömungsleitwand (44) des ersten Strömungspfads (42) einen mittleren Strömungskanal (48) des ersten Strömungspfads (42) begrenzt und mit der inneren Strömungsleitwand (54) des ersten Strömungspfads (42) den inneren Strömungskanal (52) des ersten Strömungspfads (42) begrenzt, oder/und dass die Strömungsleitanordnung (40) in Zuordnung zu dem zweiten Strömungspfad (42') wenigstens eine zwischen der äußeren Strömungsleitwand (44') des zweiten Strömungspfads (42') und der inneren Strömungsleitwand (54') des zweiten Strömungspfads (42') angeordnete mittlere Strömungsleitwand (50') des zweiten Strömungspfads (42') umfasst, wobei die wenigstens eine mittlere Strömungsleitwand (50') des zweiten Strömungspfads (42') mit der äußeren Strömungsleitwand (44') des zweiten Strömungspfads (42') einen mittleren Strömungskanal (48') des zweiten Strömungspfads (42') begrenzt und mit der inneren Strömungsleitwand (54') des zweiten Strömungspfads (42') den inneren Strömungskanal (52') des zweiten Strömungspfads (42') begrenzt.

13. Mischer nach Anspruch 12, **dadurch gekennzeichnet,**
**dass** die wenigstens eine mittlere Strömungsleitwand (50) des ersten Strömungspfads (42) und die wenigstens eine mittlere Strömungsleitwand (50') des zweiten Strömungspfads (42') einen ersten mittleren Öffnungsbereich (68) bereitstellen, wobei der erste mittlere Öffnungsbereich (68) in Umfangsrichtung bezüglich der Mischerlängsachse (L) im Bereich des äußeren Öffnungsbereichs (60) angeordnet ist oder/und eine geringere Umfangserstreckungslänge als der äußere Öffnungsbereich (60) aufweist, oder/und
**dass** die wenigstens eine mittlere Strömungsleitwand (50) des ersten Strömungspfads (42) und die wenigstens eine mittlere Strömungsleitwand (50') des zweiten Strömungspfads (42') einen zweiten mittleren Öffnungsbereich (70) bereitstellen, wobei der zweite mittlere Öffnungsbereich (70) in Umfangsrichtung bezüglich der Mischerlängsachse (L) im Bereich des inneren Öffnungsbereichs (66) angeordnet ist oder/und eine geringere Umfangserstreckungslänge als der innere Öffnungsbereich (66) aufweist, oder/und
**dass** die wenigstens eine mittlere Strömungsleitwand (50) des ersten Strömungspfads (42) und die wenigstens eine mittlere Strömungsleitwand (50') des zweiten Strömungspfads (42') bezüglich einer die Mischerlängsachse (L) enthaltenden Mischer-Mittenebene (E) im Wesentlichen spiegelsymmetrisch angeordnet sind.

14. Mischer nach einem der Ansprüche 9-11, **dadurch gekennzeichnet, dass** die Strömungsleitanordnung (40) in Zuordnung zu dem ersten Strömungspfad (42) wenigstens eine zwischen der Umfangswand (12) und der inneren Strömungsleitwand (54) des ersten Strömungspfads (42) angeordnete weitere Strömungsleitwand (46, 50) des ersten Strömungspfads (42) umfasst, wobei die wenigstens eine weitere Strömungsleitwand (48, 50) des ersten Strömungspfads (42) einen äußeren Strömungskanal (44) des ersten Strömungspfads (42) begrenzt und mit der inneren Strömungsleitwand (54) des ersten Strömungspfads (42) den inneren Strömungskanal (52) des ersten Strömungspfads (42) begrenzt, oder/und dass die Strömungsleitanordnung (40) in Zuordnung zu dem zweiten Strömungspfad (42) wenigstens eine zwischen der Umfangswand (12) und der inneren Strömungsleitwand (54') des zweiten Strömungspfads (42') angeordnete weitere Strömungsleitwand (46, 50') des zweiten Strömungspfads (42') umfasst, wobei die wenigstens eine weitere Strömungsleitwand (46', 50') des zweiten Strömungspfads (42') einen äußeren Strömungskanal (44') des zweiten Strömungspfads (42') begrenzt und mit der inneren Strömungsleitwand (54') des zweiten Strömungspfads (42') den inneren Strömungskanal (52') des zweiten Strömungspfads (42') begrenzt.

15. Mischer nach Anspruch 14, **dadurch gekennzeichnet,**
**dass** die Strömungsleitanordnung (40) in Zuordnung zu dem ersten Strömungspfad (42) zwei weitere Strömungsleitwände (46, 50) umfasst, wobei die weiteren Strömungsleitwände (46, 50) des ersten Strömungspfads (42) einen äußeren Strömungskanal (44) des ersten Strömungspfads (42) begrenzen,
oder/und
**dass** die Strömungsleitanordnung (40) in Zuordnung zu dem zweiten Strömungspfad (42') zwei weitere Strömungsleitwände (46', 50') umfasst, wobei die weiteren Strömungsleitwände (46, 50') des zweiten Strömungspfads (42') einen äußeren Strömungskanal (44') des zweiten Strömungspfads (42') begrenzen,
oder/und
**dass** die wenigstens eine weitere Strömungsleitwand (46, 50) des ersten Strömungspfads (42) und die wenigstens eine weitere Strömungsleitwand (46', 50') des zweiten Strömungspfads (42') bezüglich einer vorzugsweise die Mischerlängsachse (L) enthaltenden Mischer-Mittenebene (E) im Wesentlichen spiegelsymmetrisch angeordnet sind.

16. Mischer nach einem der Ansprüche 1-15, **dadurch gekennzeichnet, dass** stromabwärts der Austrittsöffnungsanordnung (34) ein Mischelement (32) mit einer Mehrzahl von Abgasdurchtrittsöffnungen (74) vorgesehen ist.

17. Mischer nach einem der Ansprüche 1-16, **dadurch gekennzeichnet, dass** die Umfangswand (12) durch ein in Richtung der Mischerlängsachse (L) langgestrecktes rohrartiges Mischergehäuse (13) bereitgestellt ist, wobei das Mischergehäuse (13) in einem Bereich stromaufwärts der stromaufwärtigen Mischerwand (14) und stromabwärts der stromabwärtigen Mischerwand (16) jeweils einen in Richtung der Mischerlängsachse (L) an die Mischkammer (18) anschließenden Abgasströmungskanal (20, 26) bereitstellt, wobei der stromaufwärts der stromaufwärtigen Mischerwand (14) angeordnete Abgasströmungskanal (20) über die in der stromaufwärtigen Mischerwand (14) ausgebildete Eintrittsöffnungsanordnung (22) zur Mischkammer (18) offen ist und die Mischkammer (18) zu dem stromabwärts der stromabwärtigen Mischerwand (16) angeordneten Abgasströmungskanal (26) über die in der stromabwärtigen Mischerwand (16) ausgebildete Austrittsöffnungsanordnung (34) offen ist, und wobei eine Abgas-Hauptströmungsrichtung (H₁) im stromaufwärts der stromaufwärtigen Mischerwand (14) angeordneten Abgasströmungskanal (20) im Wesentlichen einer Abgas-Hauptströmungsrichtung (H₂) im stromabwärts der stromabwärtigen Mischerwand (16) Abgeordneten Abgasströmungskanal (26) entspricht.

18. Mischer nach einem der Ansprüche 1-17, **dadurch gekennzeichnet, dass** die stromaufwärtige Mischerwand (14) und die stromabwärtige Mischerwand (16) durch ein kastenartiges Mischergehäuse (76) bereitgestellt sind, wobei das kastenartige Mischergehäuse (76) einen zu der stromaufwärtigen Mischerwand (14) führenden Einströmöffnungsbereich (78) und einen Ausströmöffnungsbereich (80) aufweist, wobei eine Abgas-Hauptströmungsrichtung (H₂) im Ausströmöffnungsbereich (80) einer Abgas-Hauptströmungsrichtung (H₁) im Einströmöffnungsbereich (78) im Wesentlichen entgegengesetzt ist.

19. Abgasanlage für eine Brennkraftmaschine, umfassend einen Mischer (10) nach einem der vorangehenden Ansprüche.

## Claims

1. A mixer for an exhaust system of an internal combustion engine for mixing exhaust gas and reactant, comprising:
- a mixing chamber (18), wherein the mixing chamber (18) is delimited by an upstream mixer wall (14), a downstream mixer wall (16) following the upstream mixer wall (14) in the direction of a mixer longitudinal axis (L) and arranged at an axial distance therefrom, and a circumferential wall (12) extending between the upstream mixer wall (14) and the downstream mixer wall (16),
- a reactant dispensing arrangement (28) for dispensing reactant into the mixing chamber (18) axially between the upstream mixer wall (14) and the downstream mixer wall (16), preferably in a main reactant dispensing direction (R) oriented substantially radially in relation to the mixer longitudinal axis (L),
- an inlet opening arrangement (22) in the upstream mixer wall (14),
- an outlet opening arrangement (34) in the downstream mixer wall (16) or the circumferential wall (12),
- a flow guiding arrangement (40), arranged between the upstream mixer wall (14) and the downstream mixer wall (16), for guiding exhaust gas or/and reactant from the inlet opening arrangement (22) to the outlet opening arrangement (34), wherein the flow guiding arrangement (40) provides a first flow path (42) leading from the inlet opening arrangement (22) to the outlet opening arrangement (34) and a second flow path (42') leading from the inlet opening arrangement (22) to the outlet opening arrangement (34), wherein each flow path (42, 42') has at least two flow channels (44, 48, 52, 44', 48' 52') leading from the inlet opening arrangement (22) to the outlet opening arrangement (34),
**characterized in that** the flow guiding arrangement (40) comprises, in association with at least one flow path (42, 42'), at least two flow guiding walls (46, 50, 54, 46', 50', 54') extending between the upstream mixer wall (14) and the downstream mixer wall (16), and connected to the upstream mixer wall (14) and the downstream mixer wall (16) by material joining or/and positive engagement, wherein at least one flow guiding wall (46, 46'), together with the circumferential wall (12), delimits a flow channel (44, 44') or/and at least one flow guiding wall (46, 50, 46', 50'), together with a further flow guiding wall (50, 54, 50', 54'), delimits a flow channel (44, 48, 52, 44', 48', 52').

2. The mixer as claimed in claim 1, **characterized in that** the first flow path (42) with its flow channels (44, 48, 52) and the second flow path (42') with its flow channels (44', 48', 52') are of substantially mirror-symmetrical design with respect to one another in relation to a mixer center plane (E) containing the mixer longitudinal axis (L).

3. The mixer as claimed in claim 1 or 2, **characterized in that** the inlet opening arrangement (22) comprises in each case at least one inlet opening (30, 32) on both sides of a mixer center plane (E) preferably containing the mixer longitudinal axis (L), or/and **in that** the inlet opening arrangement (22) is of substantially mirror-symmetrical design in relation to the mixer center plane (E).

4. The mixer as claimed in any of claims 1-3, **characterized in that** the outlet opening arrangement (34) comprises at least one outlet opening (36, 38) arranged in a centered manner in relation to a mixer center plane (E) preferably containing the mixer longitudinal axis (L), or/and **in that** the outlet opening arrangement (34) is of substantially mirror-symmetrical design in relation to the mixer center plane (E), or/and **in that** the outlet opening arrangement (34) comprises at least two outlet openings (36, 38) in the downstream mixer wall (16), which are radially staggered in relation to the mixer longitudinal axis (L).

5. The mixer as claimed in any of claims 1-4, **characterized in that** the flow guiding arrangement (40) comprises, in association with each flow path (42, 42'), at least two flow guiding walls (46, 50, 54, 46', 50', 54') extending between the upstream mixer wall (14) and the downstream mixer wall (16).

6. The mixer as claimed in any of claims 1-5, **characterized in that** the flow guiding walls (46, 50, 54, 46', 50', 54') extend between the upstream mixer wall (14) and the downstream mixer wall (16) (14) in a manner substantially parallel to the mixer longitudinal axis (L), or/and **in that** the flow guiding walls (46, 50, 54, 46', 50', 54') are connected to the upstream mixer wall (14) and the downstream mixer wall (16) by welding or brazing.

7. The mixer as claimed in claim 5 or claim 6, if referring back to claim 5, **characterized in that** the flow guiding arrangement (40) comprises at least one flow guiding element (56, 62), providing a flow guiding wall (46, 54, 46', 54') for each of the flow paths (42, 42').

8. The mixer as claimed in claim 7, **characterized in that** the flow guiding arrangement (40) comprises an outer flow guiding element (56), wherein the outer flow guiding element (56) delimits an outer flow channel (44) of the first flow path (42) and delimits an outer flow channel (44') of the second flow path (42'), wherein the outer flow guiding element (56) provides an outer transitional region (58), wherein, in the outer transitional region (56), an outer flow guiding wall (46), provided by the outer flow guiding element (56), of the first flow path (42) merges into an outer flow guiding wall (46'), provided by the outer flow guiding element (56), of the second flow path (42'), or/and wherein the outer flow guiding element (56) provides an outer opening region (60) for the entry of exhaust gas or/and reactant into a region of the mixing chamber (18) which is surrounded by the outer flow guiding element (56),
preferably wherein the outer opening region (60) provided by the outer flow guiding element (56) is positioned substantially opposite the outer transitional region (58) provided by the outer flow guiding element (56) in relation to the mixer longitudinal axis (L).

9. The mixer as claimed in claim 7 or 8, **characterized in that** the flow guiding arrangement (40) comprises an inner flow guiding element (62), wherein the inner flow guiding element (62) delimits an inner flow channel (52) of the first flow path (42) and delimits an inner flow channel (52') of the second flow path (42'), wherein the inner flow guiding element (62) provides an inner transitional region (64), wherein, in the inner transitional region (64), an inner flow guiding wall (54), provided by the inner flow guiding element (62), of the first flow path (42) merges into an inner flow guiding wall (54'), provided by the inner flow guiding element (62), of the second flow path (42'), or/and wherein the inner flow guiding element (62) provides an inner opening region (66) for the entry of exhaust gas or/and reactant into a region of the mixing chamber (18) which is surrounded by the inner flow guiding element (62),
preferably wherein the inner opening region (66) provided by the inner flow guiding element (62) is positioned substantially opposite the inner transitional region (64) provided by the inner flow guiding element (62) in relation to the mixer longitudinal axis (L).

10. The mixer as claimed in claim 8 and 9, **characterized in that** the inner transitional region (64) is arranged in the region of the outer opening region (60) in the circumferential direction around the mixer longitudinal axis (L), or/and **in that** the inner flow guiding element (62) covers the outer opening region (66) in the circumferential direction, or/and **in that** the outer transitional region (58) is arranged in the region of the inner opening region (66) in the circumferential direction around the mixer longitudinal axis (L), or/and **in that** the outer flow guiding element (56) covers the inner opening region (66) in the circumferential direction.

11. The mixer as claimed in claim 8 or claim 9 or in claim 10, **characterized in that** the outer flow guiding element (56) is of substantially mirror-symmetrical design in relation to a mixer center plane (E) preferably containing the mixer longitudinal axis (L), or/and **in that** the inner flow guiding element (62) is of substantially mirror-symmetrical design in relation to a mixer center plane (E) preferably containing the mixer longitudinal axis (L) or is of substantially point-symmetrical design in relation to an axis of symmetry preferably orthogonal to the central longitudinal axis (L).

12. The mixer as claimed in claim 8 and claim 9 or as claimed in claim 10 or 11, **characterized in that** the flow guiding arrangement (40) comprises, in association with the first flow path (42), at least one central flow guiding wall (50) of the first flow path (42), which central flow guiding wall is arranged between the outer flow guiding wall (44) of the first flow path (42) and the inner flow guiding wall (54) of the first flow path (42), wherein the at least one central flow guiding wall (50) of the first flow path (42), with the outer flow guiding wall (44) of the first flow path (42), delimits a central flow channel (48) of the first flow path (42) and, with the inner flow guiding wall (54) of the first flow path (42), delimits the inner flow channel (52) of the first flow path (42), or/and **in that** the flow guiding arrangement (40) comprises, in association with the second flow path (42'), at least one central flow guiding wall (50') of the second flow path (42'), which central flow guiding wall is arranged between the outer flow guiding wall (44') of the second flow path (42') and the inner flow guiding wall (54') of the second flow path (42'), wherein the at least one central flow guiding wall (50') of the second flow path (42'), with the outer flow guiding wall (44') of the second flow path (42'), delimits a central flow channel (48') of the second flow path (42') and, with the inner flow guiding wall (54') of the second flow path (42'), delimits the inner flow channel (52') of the second flow path (42').

13. The mixer as claimed in claim 12, **characterized in that** the at least one central flow guiding wall (50) of the first flow path (42) and the at least one central flow guiding wall (50') of the second flow path (42') provide a first central opening region (68), wherein the first central opening region (68) is arranged in the region of the outer opening region (60) in the circumferential direction in relation to the mixer longitudinal axis (L), or/and has a shorter circumferential length of extent than the outer opening region (60),
or/and
**in that** the at least one central flow guiding wall (50) of the first flow path (42) and the at least one central flow guiding wall (50') of the second flow path (42') provide a second central opening region (70), wherein the second central opening region (70) is arranged in the region of the inner opening region (66) in the circumferential direction in relation to the mixer longitudinal axis (L), or/and has a shorter circumferential length of extent than the inner opening region (66),
or/and
**in that** the at least one central flow guiding wall (50) of the first flow path (42) and the at least one central flow guiding wall (50') of the second flow path (42') are arranged in a substantially mirror-symmetrical manner in relation to a mixer center plane (E) containing the mixer longitudinal axis (L).

14. The mixer as claimed in any of claims 9-11, **characterized in that** the flow guiding arrangement (40) comprises, in association with the first flow path (42), at least one further flow guiding wall (46, 50) of the first flow path (42), which further flow guiding wall is arranged between the circumferential wall (12) and the inner flow guiding wall (54) of the first flow path (42), wherein the at least one further flow guiding wall (48, 50) of the first flow path (42) delimits an outer flow channel (44) of the first flow path (42), and, with the inner flow guiding wall (54) of the first flow path (42), delimits the inner flow channel (52) of the first flow path (42), or/and **in that** the flow guiding arrangement (40) comprises, in association with the second flow path (42), at least one further flow guiding wall (46, 50') of the second flow path (42'), which further flow guiding wall is arranged between the circumferential wall (12) and the inner flow guiding wall (54') of the second flow path (42'), wherein the at least one further flow guiding wall (46', 50') of the second flow path (42') delimits an outer flow channel (44') of the second flow path (42'), and, with the inner flow guiding wall (54') of the second flow path (42'), delimits the inner flow channel (52') of the second flow path (42').

15. The mixer as claimed in claim 14, **characterized in that**
the flow guiding arrangement (40) comprises, in association with the first flow path (42), two further flow guiding walls (46, 50), wherein the further flow guiding walls (46, 50) of the first flow path (42) delimit an outer flow channel (44) of the first flow path (42),
or/and
**in that** the flow guiding arrangement (40) comprises, in association with the second flow path (42'), two further flow guiding walls (46', 50'), wherein the further flow guiding walls (46, 50') of the second flow path (42') delimit an outer flow channel (44') of the second flow path (42'),
or/and **in that** the at least one further flow guiding wall (46, 50) of the first flow path (42) and the at least one further flow guiding wall (46', 50') of the second flow path (42') are arranged in a substantially mirror-symmetrical manner in relation to a mixer center plane (E) preferably containing the mixer longitudinal axis (L).

16. The mixer as claimed in any of claims 1-15, **characterized in that** a mixing element (32) having a plurality of exhaust gas passage openings (74) is provided downstream of the outlet opening arrangement (34).

17. The mixer as claimed in any of claims 1-16, **characterized in that** the circumferential wall (12) is provided by a tubular mixer housing (13) which is elongate in the direction of the mixer longitudinal axis (L), wherein, in a region upstream of the upstream mixer wall (14) and downstream of the downstream mixer wall (16), the mixer housing (13) in each case provides an exhaust gas flow channel (20, 26) which adjoins the mixing chamber (18) in the direction of the mixer longitudinal axis (L), wherein the exhaust gas flow channel (20) arranged upstream of the upstream mixer wall (14) is open to the mixing chamber (18) via the inlet opening arrangement (22) formed in the upstream mixer wall (14), and the mixing chamber (18) is open to the exhaust gas flow channel (26) arranged downstream of the downstream mixer wall (16) via the outlet opening arrangement (34) formed in the downstream mixer wall (16), and wherein a main exhaust gas flow direction (H₁) in the exhaust gas flow channel (20) arranged upstream of the upstream mixer wall (14) corresponds substantially to a main exhaust gas flow direction (H₂) in the exhaust gas flow channel (26) arranged downstream of the downstream mixer wall (16).

18. The mixer as claimed in any of claims 1-17, **characterized in that** the upstream mixer wall (14) and the downstream mixer wall (16) are provided by a box-like mixer housing (76), wherein the box-like mixer housing (76) has an inflow opening region (78) leading to the upstream mixer wall (14) and an outflow opening region (80), wherein a main exhaust gas flow direction (H₂) in the outflow opening region (80) is substantially opposite to a main exhaust gas flow direction (H₁) in the inflow opening region (78).

19. An exhaust system for an internal combustion engine, comprising a mixer (10) as claimed in any of the preceding claims.

## Revendications

1. Un mélangeur pour un système d'échappement d'un moteur à combustion interne destiné à mélanger les gaz d'échappement et le réactif, comprenant :
- une chambre de mélange (18), dans laquelle la chambre de mélange (18) est délimitée par une paroi de mélangeur amont (14), une paroi de mélangeur aval (16) suivant la paroi de mélangeur amont (14) dans la direction d'un axe longitudinal (L) du mélangeur et disposée à une distance axiale de celle-ci, et une paroi circonférentielle (12) s'étendant entre la paroi de mélangeur amont (14) et la paroi de mélangeur aval (16),
- un dispositif de distribution de réactif (28) pour distribuer le réactif dans la chambre de mélange (18) axialement entre la paroi de mélangeur amont (14) et la paroi de mélangeur aval (16), de préférence dans une direction principale de distribution de réactif (R) orientée sensiblement radialement par rapport à l'axe longitudinal (L) du mélangeur,
- un agencement d'ouverture d'entrée (22) dans la paroi de mélangeur amont (14),
- un agencement d'ouverture de sortie (34) dans la paroi de mélangeur aval (16) ou la paroi circonférentielle (12),
- un agencement de guidage d'écoulement (40), disposé entre la paroi de mélangeur amont (14) et la paroi de mélangeur aval (16), pour guider les gaz d'échappement et/ou le réactif depuis l'agencement d'ouverture d'entrée (22) vers l'agencement d'ouverture de sortie (34), dans lequel l'agencement de guidage d'écoulement (40) fournit un premier chemin d'écoulement (42) menant de l'agencement d'ouverture d'entrée (22) à l'agencement d'ouverture de sortie (34) et un deuxième chemin d'écoulement (42') menant de l'agencement d'ouverture d'entrée (22) à l'agencement d'ouverture de sortie (34), dans lequel chaque chemin d'écoulement (42, 42') comporte au moins deux canaux d'écoulement (44, 48, 52, 44', 48', 52') menant de l'agencement d'ouverture d'entrée (22) à l'agencement d'ouverture de sortie (34),
**caractérisé en ce que** l'agencement de guidage d'écoulement (40) comprend, en association avec au moins un chemin d'écoulement (42, 42'), au moins deux parois de guidage d'écoulement (46, 50, 54, 46', 50', 54') s'étendant entre la paroi de mélangeur amont (14) et la paroi de mélangeur aval (16), et reliées à la paroi de mélangeur amont (14) et à la paroi de mélangeur aval (16) par assemblage de matériaux et/ou par engagement positif, au moins une paroi de guidage d'écoulement (46, 46') délimitant, conjointement avec la paroi circonférentielle (12), un canal d'écoulement (44, 44') et/ou au moins une paroi de guidage d'écoulement (46, 50, 46', 50') délimitant, conjointement avec une autre paroi de guidage d'écoulement (50, 54, 50', 54'), un canal d'écoulement (44, 48, 52, 44', 48', 52').

2. Le mélangeur selon la revendication 1, **caractérisé en ce que** le premier chemin d'écoulement (42) avec ses canaux d'écoulement (44, 48, 52) et le deuxième chemin d'écoulement (42') avec ses canaux d'écoulement (44', 48', 52') sont de conception sensiblement symétrique l'un par rapport à l'autre par rapport à un plan central (E) du mélangeur contenant l'axe longitudinal (L) du mélangeur.

3. Le mélangeur selon la revendication 1 ou 2, **caractérisé en ce que** l'agencement d'ouverture d'entrée (22) comprend dans chaque cas au moins une ouverture d'entrée (30, 32) des deux côtés d'un plan central (E) du mélangeur contenant de préférence l'axe longitudinal (L) du mélangeur, et/ou **en ce que** l'agencement d'ouvertures d'entrée (22) est de conception sensiblement symétrique par rapport au plan central (E) du mélangeur.

4. Le mélangeur selon l'une quelconque des revendications 1 à 3, **caractérisé en ce que** l'agencement d'ouvertures de sortie (34) comprend au moins une ouverture de sortie (36, 38) disposée de manière centrée par rapport à un plan centrl (E) du mélangeur contenant de préférence l'axe longitudinal (L) du mélangeur (L), et/ou **en ce que** l'agencement d'ouvertures de sortie (34) est de conception sensiblement symétrique par rapport au plan central (E) du mélangeur, et/ou **en ce que** l'agencement d'ouvertures de sortie (34) comprend au moins deux ouvertures de sortie (36, 38) dans la paroi de mélangeur aval (16), qui sont décalées radialement par rapport à l'axe longitudinal (L) du mélangeur.

5. Le mélangeur selon l'une quelconque des revendications 1 à 4, **caractérisé en ce que** l'agencement de guidage d'écoulement (40) comprend, en association avec chaque chemin d'écoulement (42, 42'), au moins deux parois de guidage d'écoulement (46, 50, 54, 46', 50', 54') s'étendant entre la paroi de mélangeur amont (14) et la paroi de mélangeur aval (16).

6. Le mélangeur selon l'une quelconque des revendications 1 à 5, **caractérisé en ce que** les parois de guidage d'écoulement (46, 50, 54, 46', 50', 54') s'étendent entre la paroi de mélangeur amont (14) et la paroi de mélangeur aval (16) de manière sensiblement parallèle à l'axe longitudinal (L) du mélangeur,
ou/et **en ce que** les parois de guidage d'écoulement (46, 50, 54, 46', 50', 54') sont reliées à la paroi de mélangeur amont (14) et à la paroi de mélangeur aval (16) par soudage ou brasage.

7. Le mélangeur selon la revendication 5 ou la revendication 6, en se référant à la revendication 5, **caractérisé en ce que** l'agencement de guidage d'écoulement (40) comprend au moins un élément de guidage d'écoulement (56, 62), fournissant une paroi de guidage d'écoulement (46, 54, 46', 54') pour chacun des chemins d'écoulement (42, 42').

8. Le mélangeur selon la revendication 7, **caractérisé en ce que** l'agencement de guidage d'écoulement (40) comprend un élément de guidage d'écoulement externe (56), dans lequel l'élément de guidage d'écoulement externe (56) délimite un canal d'écoulement externe (44) du premier chemin d'écoulement (42) et délimite un canal d'écoulement externe (44) du deuxième chemin d'écoulement (42), dans lequel l'élément de guidage d'écoulement externe (56) fournit une région de transition externe (58), dans laquelle, dans la région de transition externe (56), une paroi de guidage d'écoulement externe (46), fournie par l'élément de guidage d'écoulement externe (56), du premier chemin d'écoulement (42) se fond dans une paroi de guidage d'écoulement externe (46') prévue par l'élément de guidage d'écoulement externe (56) du deuxième chemin d'écoulement (42'), et/ou dans lequel l'élément de guidage d'écoulement externe (56) présente une région d'ouverture externe (60) pour l'entrée de gaz d'échappement et/ou de réactif dans une région de la chambre de mélange (18) qui est entourée par l'élément de guidage d'écoulement externe (56),
de préférence dans lequel la région d'ouverture externe (60) prévue par l'élément de guidage d'écoulement externe (56) est positionnée sensiblement à l'opposé de la région de transition externe (58) prévue par l'élément de guidage d'écoulement externe (56) par rapport à l'axe longitudinal (L) du mélangeur.

9. Le mélangeur selon la revendication 7 ou 8, **caractérisé en ce que** l'agencement de guidage d'écoulement (40) comprend un élément de guidage d'écoulement interne (62), dans lequel l'élément de guidage d'écoulement interne (62) délimite un canal d'écoulement interne (52) du premier chemin d'écoulement (42) et délimite un canal d'écoulement interne (52') du deuxième chemin d'écoulement (42'), dans lequel l'élément de guidage d'écoulement interne (62) fournit une région de transition interne (64), dans lequel, dans la région de transition interne (64), une paroi de guidage d'écoulement interne (54), fournie par l'élément de guidage d'écoulement interne (62), du premier chemin d'écoulement (42) se fond dans une paroi de guidage d'écoulement interne (54') prévue par l'élément de guidage d'écoulement interne (62) du deuxième chemin d'écoulement (42'), et/ou dans lequel l'élément de guidage d'écoulement interne (62) prévoit une région d'ouverture interne (66) pour l'entrée de gaz d'échappement et/ou de réactif dans une région de la chambre de mélange (18) qui est entourée par l'élément de guidage d'écoulement interne (62),
de préférence dans lequel la région d'ouverture interne (66) fournie par l'élément de guidage d'écoulement interne (62) est positionnée sensiblement à l'opposé de la région de transition intérne (64) fournie par l'élément de guidage d'écoulement interne (62) par rapport à l'axe longitudinal (L) du mélangeur.

10. Le mélangeur selon la revendication 8 et la revendication 9, **caractérisé en ce que** la région de transition interne (64) est disposée dans la zone de la région d'ouverture externe (60) dans la direction circonférentielle autour de l'axe longitudinal (L) du mélangeur (L), et/ou **en ce que** l'élément de guidage d'écoulement interne (62) recouvre la région d'ouverture externe (66) dans la direction circonférentielle, et/ou **en ce que** la région de transition externe (58) est disposée dans la zone de la région d'ouverture interne (66) dans la direction circonférentielle autour de l'axe longitudinal (L) du mélangeur, et/ou **en ce que** l'élément de guidage d'écoulement externe (56) recouvre la région d'ouverture interne (66) dans la direction circonférentielle.

11. Le mélangeur selon la revendication 8 ou la revendication 9 ou selon la revendication 10, **caractérisé en ce que** l'élément de guidage d'écoulement externe (56) est de conception sensiblement symétrique par rapport à un plan central (E) du mélangeur contenant de préférence l'axe longitudinal (L) du mélangeur,
et/ou **en ce que** l'élément de guidage d'écoulement interne (62) est de conception sensiblement symétrique par rapport à un plan central (E) du mélangeur contenant de préférence l'axe longitudinal (L) du mélangeur ou est de conception sensiblement symétrique par rapport à un axe de symétrie de préférence orthogonal à l'axe longitudinal central (L).

12. Le mélangeur selon les revendications 8 et 9 ou sel la revendication 10 ou 11, **caractérisé en ce que** l'agencement de guidage d'écoulement (40) comprend, en association avec le premier chemin d'écoulement (42), au moins une paroi centrale de guidage d'écoulement (50) du premier chemin d'écoulement (42), laquelle paroi centrale de guidage d'écoulement est disposée entre la paroi externe de guidage d'écoulement (44) du premier chemin d'écoulement (42) et la paroi centrale de guidage d'écoulement (54) du premier chemin d'écoulement (42), dans lequel la au moins une paroi centrale de guidage d'écoulement (50) du premier chemin d'écoulement (42), avec la paroi externe de guidage d'écoulement (44) du premier chemin d'écoulement (42), délimite un canal d'écoulement central (48) du premier chemin d'écoulement (42) et, avec la paroi de guidage d'écoulement interne (54) du premier chemin d'écoulement (42), délimite le canal d'écoulement interne (52) du premier chemin d'écoulement (42), ou/et **en ce que** l'agencement de guidage d'écoulement (40) comprend, en association avec le deuxième chemin d'écoulement (42'), au moins une paroi centrale de guidage d'écoulement (50') du deuxième chemin d'écoulement (42'), laquelle paroi centrale de guidage d'écoulement est disposée entre la paroi externe de guidage d'écoulement (44') du deuxième chemin d'écoulement (42') et la paroi interne de guidage d'écoulement (54') du deuxième chemin d'écoulement (42'), dans lequel la au moins une paroi centrale de guidage d'écoulement (50') du deuxième chemin d'écoulement (42 ), avec la paroi externe de guidage d'écoulement (44') du deuxième chemin d'écoulement (42'), délimite un canal d'écoulement central (48') du deuxième chemin d'écoulement (42') et, avec la paroi interne de guidage d'écoulement (54') du deuxième chemin d'écoulement (42'), délimite le canal d'écoulement interne (52') du deuxième chemin d'écoulement (42').

13. Le mélangeur selon la revendication 12, **caractérisé en ce que** la au moins une paroi centrale de guidage d'écoulement (50) du premier chemin d'écoulement (42) et la au moins une paroi centrale de guidage d'écoulement (50') du deuxième chemin d'écoulement (42') forment une première région d'ouverture centrale (68), dans lequel la première région d'ouverture centrale (68) est disposée dans la zone de la région d'ouverture externe (60) dans la direction circonférentielle par rapport à l'axe longitudinal (L) du mélangeur, ou/et a une longueur circonférentielle plus courte que la région d'ouverture externe (60),
et/ou
**en ce que** la au moins une paroi centrale de guidage d'écoulement (50) du premier chemin d'écoulement (42) et la au moins une paroi centrale de guidage d'écoulement (50') du deuxième chemin d'écoulement (42') forment une deuxième région d'ouverture centrale (70), dans lequel la deuxième région d'ouverture centrale (70) est disposée dans la zone de la région d'ouverture interne (66) dans la direction circonférentielle par rapport à l'axe longitudinal (L) du mélangeur, et/ou a une longueur circonférentielle plus courte que la région d'ouverture interne (66),
et/ou
**en ce que** la au moins une paroi centrale de guidage d'écoulement (50) du premier chemin d'écoulement (42) et la au moins une paroi centrale de guidage d'écoulement (50') du deuxième chemin d'écoulement (42') sont disposées de manière sensiblement symétrique par rapport à un plan central (E) du mélangeur contenant l'axe longitudinal (L) du mélangeur.

14. Le mélangeur selon l'une quelconque des revendications 9 à 11, **caractérisé en ce que** l'agencement de guidage d'écoulement (40) comprend, en association avec le premier chemin d'écoulement (42), au moins une autre paroi de guidage d'écoulement (46, 50) du premier chemin d'écoulement (42), laquelle autre paroi de guidage d'écoulement est agencée entre la paroi circonférentielle (12) et la paroi de guidage d'écoulement interne (54) du premier chemin d'écoulement (42), dans lequel la au moins une autre paroi de guidage d'écoulement (48, 50) du premier chemin d'écoulement (42) délimite un canal d'écoulement externe (44) du premier chemin d'écoulement (42) et, avec la paroi de guidage d'écoulement interne (54) du premier chemin d'écoulement (42), délimite le canal d'écoulement interne (52) du premier chemin d'écoulement (42),
ou/et **en ce que** l'agencement de guidage d'écoulement (40) comprend, en association avec le deuxième chemin d'écoulement (42), au moins une autre paroi de guidage d'écoulement (46, 50') du deuxième chemin d'écoulement (42'), disposée entre la paroi circonférentielle (12) et la paroi de guidage d'écoulement interne (54') du deuxième chemin d'écoulement (42'), dans lequel la au moins une paroi de guidage d'écoulement supplémentaire (46', 50') du deuxième chemin d'écoulement (42') délimite un canal d'écoulement externe (44') du deuxième chemin d'écoulement (42') et, avec la paroi de guidage d'écoulement interne (54') du deuxième chemin d'écoulement (42'), délimite le canal d'écoulement interne (52') du deuxième chemin d'écoulement (42').

15. Le mélangeur selon la revendication 14, **caractérisé en ce que** l'agencement de guidage d'écoulement (40) comprend, en association avec le premier chemin d'écoulement (42), deux autres parois de guidage d'écoulement (46, 50), dans lequel les autres parois de guidage d'écoulement (46, 50) du premier chemin d'écoulement (42) délimitent un canal d'écoulement externe (44) du premier chemin d'écoulement (42),
et/ou
**en ce que** l'agencement de guidage d'écoulement (40) comprend, en association avec le deuxième chemin d'écoulement (42'), deux autres parois de guidage d'écoulement (46', 50'), dans lequel les autres parois de guidage d'écoulement (46, 50') du deuxième chemin d'écoulement (42') délimitent un canal d'écoulement externe (44') du deuxième chemin d'écoulement (42'),
ou/et
**en ce que** la au moins une autre paroi de guidage d'écoulement (46, 50) du premier chemin d'écoulement (42) et la au moins une autre paroi de guidage d'écoulement (46', 50') du deuxième chemin d'écoulement (42') sont disposées de manière sensiblement symétrique par rapport à un plan central (E) du mélangeur contenant de préférence l'axe longitudinal (L) du mélangeur.

16. Le mélangeur selon l'une quelconque des revendications 1 à 15, **caractérisé en ce qu'**un élément de mélange (32) comportant une pluralité d'ouvertures de passage de gaz d'échappement (74) est prévu en aval de l'agencement d'ouvertures de sortie (34).

17. Le mélangeur selon l'une quelconque des revendications 1 à 16, **caractérisé en ce que** la paroi circonférentielle (12) est formée par un boîtier de mélangeur tubulaire (13) qui est allongé dans la direction de l'axe longitudinal (L) du mélangeur, dans lequel, dans une région en amont de la paroi de mélangeur amont (14) et en aval de la paroi de mélangeur aval (16), le boîtier de mélangeur (13) comporte dans chaque cas un canal d'écoulement des gaz d'échappement (20, 26) qui jouxte la chambre de mélange (18) dans la direction de l'axe longitudinal (L) du mélangeur, dans lequel le canal d'écoulement des gaz d'échappement (20) disposé en amont de la paroi de mélangeur amont (14) est ouvert vers la chambre de mélange (18) via l'agencement d'ouverture d'entrée (22) formé dans la paroi de mélangeur amont (14), et la chambre de mélange (18) est ouverte vers le chemin d'écoulement des gaz d'échappement (26) disposé en aval de la paroi aval (16) du mélangeur via l'agencement d'ouvertures de sortie (34) formé dans la paroi de mélangeur aval (16), et dans lequel une direction principale d'écoulement des gaz d'échappement (H₁) dans le canal d'écoulement des gaz d'échappement (20) disposé en amont de la paroi de mélangeur amont (14) correspond sensiblement à une direction principale d'écoulement des gaz d'échappement (H₂) dans le canal d'écoulement des gaz d'échappement (26) disposé en aval de la paroi de mélangeur aval (16).

18. Le mélangeur selon l'une quelconque des revendications 1 à 17, **caractérisé en ce que** la paroi de mélangeur amont (14) et la paroi de mélangeur aval (16) sont formées par un boîtier de mélangeur en forme de boîte (76), dans lequel le boîtier de mélangeur en forme de boîte (76) comporte une région d'ouverture d'entrée (78) menant à la paroi de mélangeur amont (14) et une région d'ouverture de sortie (80), dans lequel une direction principale d'écoulement des gaz d'échappement (H₂) dans la région d'ouverture de sortie (80) est sensiblement opposée à une direction principale d'écoulement des gaz d'échappement (H₁) dans la région d'ouverture d'entrée (78).

19. Un système d'échappement pour un moteur à combustion interne, comprenant un mélangeur (10) selon l'une quelconque des revendications précédentes.
